(19) Europäisches Patentamt
European Patent Office
Office européen des brevets

(11) **EP 4 670 808 A1**

(12) **EUROPEAN PATENT APPLICATION**
published in accordance with Art. 153(4) EPC

(43) Date of publication:
**31.12.2025 Bulletin 2026/01**

(21) Application number: **24847689.7**

(22) Date of filing: **07.05.2024**

(51) International Patent Classification (IPC):
***A63F 13/52*** *(2014.01)*

(52) Cooperative Patent Classification (CPC):
**G06T 15/506;** Y02B 20/40

(86) International application number:
**PCT/CN2024/091543**

(87) International publication number:
**WO 2025/025724 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.08.2023 CN 202310972605**

(71) Applicant: **Tencent Technology (Shenzhen)
Company Limited
Shenzhen, Guangdong 518057 (CN)**

(72) Inventor: **CAO, Shun
Shenzhen, Guangdong 518057 (CN)**

(74) Representative: **EP&C
P.O. Box 3241
2280 GE Rijswijk (NL)**

(54) **LIGHTING RENDERING METHOD AND APPARATUS, AND TERMINAL AND STORAGE MEDIUM**

(57) An lighting rendering method and apparatus, a terminal, and a storage medium are provided, and belong to the field of computer technologies. The method includes: obtaining light data of a plurality of lighting probes in a scene (201); determining, based on the light data and from the plurality of rays, a first ray reaching a pixel in a current screen space in the scene, a second ray missing all pixels in the current screen space in the scene, and first indirect illumination data which is indirect illumination data of the pixel reached by the first ray (202); obtaining a screen element reached by the second ray in the current screen space and a screen element reached by the second ray outside the current screen space, and obtaining second indirect illumination data from an illumination buffer library of the screen element, the second indirect illumination data being indirect illumination data of the screen element (203); and performing lighting rendering on the scene based on the first indirect illumination data and the second indirect illumination data (204). The method improves accuracy of illumination rendering.

A terminal obtains light data of a plurality of illumination probes in a scene, the light data including starting points and directions of a plurality of rays on the illumination probes — 201

The terminal determines a first ray, a second ray, and first indirect illumination data of the plurality of rays based on the light data, the first ray being a ray that hits a pixel in a current screen space in the scene, the second ray being a ray that does not hit a pixel in the current screen space, and the first indirect illumination data being indirect illumination data of the hit pixel — 202

The terminal obtains an element hit by the second ray in the current screen space and outside the current screen space, and obtains second indirect illumination data from an illumination buffer library of the element, the second indirect illumination data being indirect illumination data of the element — 203

The terminal performs illumination rendering on the scene based on the first indirect illumination data and the second indirect illumination data — 204

FIG. 2

EP 4 670 808 A1

**Description**

RELATED APPLICATION

This application claims priority to Chinese Patent Application No. 202310972605.6, filed on August 3, 2023 and entitled " LIGHTING RENDERING METHOD AND APPARATUS, TERMINAL, AND STORAGE MEDIUM", which is incorporated herein by reference in its entirety.

FIELD OF THE TECHNOLOGY

This application relates to the field of computer technologies, and in particular, to an illumination rendering method and apparatus, a terminal, and a storage medium.

BACKGROUND OF THE DISCLOSURE

With the development of computer technologies, a global illumination technology is widely applied to fields such as games, films and television dramas, and virtual reality, and is used to achieve light and shadow effects in related scenes. The global illumination technology is a high-order rendering technology that considers both direct illumination from a light source and indirect illumination from reflection of another object, thereby greatly improving reality of a scene.

SUMMARY

Embodiments of this application provide an illumination rendering method (namely, a lighting rendering method) and apparatus, a terminal, and a storage medium, to improve accuracy of illumination rendering. The technical solutions are as follows:

According to one aspect, an illumination rendering method (namely, a lighting rendering method) is provided. The method includes:

obtaining light data of a plurality of lighting probes in a scene, the light data comprising starting points and directions of a plurality of rays on the lighting probes;

determining, based on the light data and from the plurality of rays, a first ray reaching a pixel in a current screen space in the scene, a second ray missing all pixels in the current screen space in the scene, and first indirect illumination data which is indirect illumination data of the pixel reached by the first ray;

obtaining a screen element reached by the second ray in the current screen space and a screen element reached by the second ray outside the current screen space, and obtaining second indirect illumination data from an illumination buffer library of the screen element, the second indirect illumination data being indirect illumination data of the screen element; and

performing lighting rendering on the scene based on the first indirect illumination data and the second indirect illumination data.

According to another aspect, an illumination rendering apparatus is provided. The apparatus includes:

an obtaining module, configured to obtain light data of a plurality of lighting probes in a scene, the light data comprising starting points and directions of a plurality of rays on the lighting probes;

a detection module, configured to determine, based on the light data and from the plurality of rays, a first ray reaching a pixel in a current screen space in the scene, a second ray missing all pixels in the current screen space in the scene, and first indirect illumination data which is indirect illumination data of the pixel reached by the first ray;

the obtaining module, further configured to obtain a screen element reached by the second ray in the current screen space and a screen element reached by the second ray outside the current screen space, and obtaining second indirect illumination data from an illumination buffer library of the screen element, the second indirect illumination data being indirect illumination data of the screen element; and

a rendering module, configured to perform lighting rendering on the scene based on the first indirect illumination data and the second indirect illumination data.

According to another aspect, a terminal is provided. The terminal includes a processor and a memory, the memory being configured to store at least one program, and the at least one program being loaded by the processor to perform the illumination rendering method in the embodiments of this application.

According to another aspect, a computer-readable storage medium is provided. The computer-readable storage medium stores at least one program, the at least one program being loaded and executed by a processor to implement the illumination rendering method in the embodiments of this application.

According to another aspect, a computer program product is provided. The computer program product includes computer program code, the computer program code is stored in a computer-readable storage medium, a processor of a terminal reads the computer program code from the computer-readable storage medium, and the processor executes the computer program code, causing the terminal to perform the illumination rendering method according to any one of the foregoing implementations.

BRIEF DESCRIPTION OF THE DRAWINGS

To describe the technical solutions of embodiments of this application more clearly, the following briefly introduces the accompanying drawings required for describing the embodiments. Apparently, the accompanying drawings in the following description show only some embodiments of this application, and a person of ordinary skill in the art may still derive other drawings from these accompanying drawings without creative efforts.

FIG. 1 is a schematic diagram of an implementation environment according to an embodiment of this application.

FIG. 2 is a flowchart of an illumination rendering method according to an embodiment of this application.

FIG. 3 is a flowchart of another illumination rendering method according to an embodiment of this application.

FIG. 4 is a flowchart of a method for obtaining a pixel buffer library according to an embodiment of this application.

FIG. 5 is a schematic diagram of light bouncing in a scene according to an embodiment of this application.

FIG. 6 is a schematic diagram of a starting point of a ray according to an embodiment of this application.

FIG. 7 is a schematic diagram of an iteration process according to an embodiment of this application.

FIG. 8 is a flowchart of a method for obtaining a surfel buffer library according to an embodiment of this application.

FIG. 9 is a schematic diagram of a surfel according to an embodiment of this application.

FIG. 10 is a schematic diagram of a relationship between a surfel and a pixel according to an embodiment of this application.

FIG. 11 is a heatmap of surfel distribution according to an embodiment of this application.

FIG. 12 is a schematic diagram of discrete surfels in a scene according to an embodiment of this application.

FIG. 13 is a flowchart of a method for obtaining a voxel buffer library according to an embodiment of this application.

FIG. 14 is a schematic diagram of a three-dimensional texture map according to an embodiment of this application.

FIG. 15 is a schematic diagram of voxels of a plurality of sizes according to an embodiment of this application.

FIG. 16 is a schematic diagram of a cone and sizes of voxels according to an embodiment of this application.

FIG. 17 is a schematic diagram of a framework of global illumination according to an embodiment of this application.

FIG. 18 is another schematic diagram of a framework of global illumination according to an embodiment of this application.

FIG. 19 is a schematic diagram of an illumination setting interface according to an embodiment of this application.

FIG. 20 is a schematic diagram of an illumination effect in a scene according to an embodiment of this application.

FIG. 21 is a schematic diagram of comparison between illumination effects according to an embodiment of this application.

FIG. 22 is a schematic diagram of adjusting an illumination effect according to an embodiment of this application.

FIG. 23 is a schematic diagram of a scene obtained after illumination rendering is performed according to an embodiment of this application.

FIG. 24 is a block diagram of an illumination rendering apparatus according to an embodiment of this application.

FIG. 25 is a block diagram of a terminal according to an embodiment of this application.

DESCRIPTION OF EMBODIMENTS

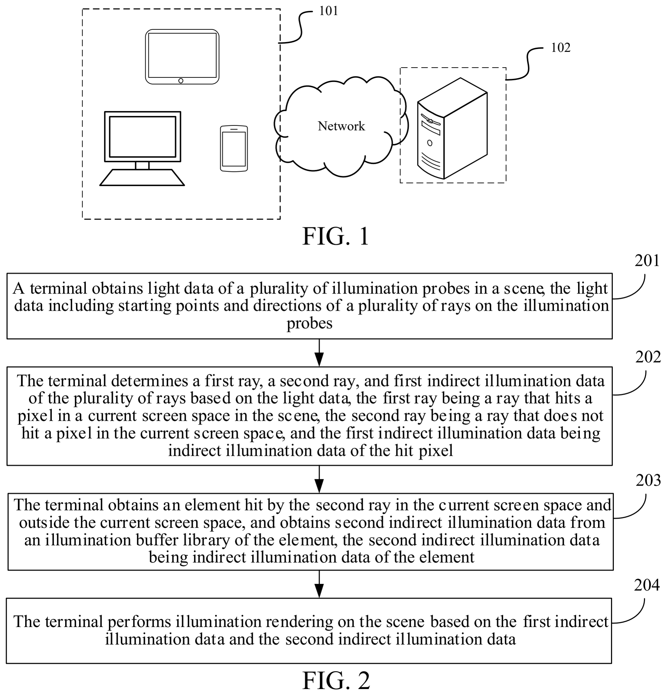

To make the objectives, technical solutions, and advantages of this application clearer, implementations of this application are further described below in detail with reference to the accompanying drawings.
The terms "first", "second", and the like in this application are used for distinguishing between same items or similar items that have basically the same effects and functions. The "first", "second", and "n$^{th}$" do not have a dependency relationship in logic or time sequence, and a quantity and an execution order thereof are not limited.
In this application, the term "at least one" means one or more, and "a plurality of" means two or more.
Information (including, but not limited to, user device information, user personal information, and the like), data (including, but not limited to, data for analysis, stored data, displayed data, and the like), and signals involved in this application are all authorized by users or fully authorized by all parties, and collection, use, and processing of related data need to comply with related laws, regulations, and standards of related countries and regions. For example, light data, indirect illumination data, and the like involved in this application are obtained with full authorization.
Professional terms involved in this application are described below.
Virtual scene: It is a virtual scene displayed (or provided) when an application program is run on a terminal. The virtual scene may be a simulated environment for the real world, or may be a semi-simulated and semi-fictional virtual environment, or may be an entirely fictional virtual environment. The virtual scene may be any one of a two-dimensional virtual scene, a 2.5-dimensional virtual scene, or a three-dimensional virtual scene. The dimension of the virtual scene is not limited in the embodiments of this application. For example, the virtual scene may include the sky, the land, the ocean, or the like. The land may include environmental elements such as the desert and a city. A terminal user may control a virtual object to move in the virtual scene.
An implementation environment involved in this application is described below.
An illumination rendering method (namely, a lighting rendering method) provided in the embodiments of this application is performed by a terminal. An illumination rendering method is a method in which the terminal performs lighting rendering on a scene by obtaining light data of lighting probes in a virtual scene. The following describes an implementation environment of the illumination rendering method provided in the embodiments of this application. FIG. 1 is a schematic diagram of an implementation environment of an illumination rendering method according to an embodiment of this application. The implementation environment includes a terminal 101 and a server 102. The terminal 101 and the server 102 are directly or indirectly connected in a wired or wireless communication manner. This is not limited in this application. In some embodiments, a target application is installed on the terminal 101. The target application may be an application on which a scene is displayed, and the scene may be a virtual scene. The terminal 101 is configured to render illumination in the scene. The server 102 is configured to provide a backend service for the target application installed on the terminal 101.
In some embodiments, the terminal 101 may be a smartphone, a tablet computer, a notebook computer, a desktop computer, a smart voice interaction device, a smart home appliance, a vehicle-mounted terminal, an aircraft, a virtual reality (VR) apparatus, an augmented reality (AR) apparatus, or the like, but is not limited thereto. In some embodiments, the server 102 is an independent server, a server cluster or a distributed system that includes a plurality of servers, or a cloud server that provides a cloud service, a cloud database, cloud computing, a cloud function, cloud storage, a network service, cloud communication, a middleware service, a domain name service, a security service, a content delivery network (CDN), and a basic cloud computing service such as big data and an artificial intelligence platform. In some embodiments, the server 102 is responsible for primary computing work, and the terminal 101 is responsible for secondary computing work. Alternatively, the server 102 is responsible for secondary computing work, and the terminal 101 is responsible for primary computing work. Alternatively, a distributed computing architecture is used between the server 102 and the terminal 101 for collaborative computing.

FIG. 2 is a flowchart of an illumination rendering method (namely, a lighting rendering method) according to an embodiment of this application. The method includes following operations.

**201: A terminal obtains light data of a plurality of illumination probes in a scene, the light data including starting points and directions of a plurality of rays on the illumination probes.**

In this embodiment of this application, the scene may be a virtual scene. A light source exists in the scene, and the light source can simulate a real illumination effect of a light source in reality. In the scene, propagation of light in an environment may be simulated, so that a simulated global illumination effect is implemented. In embodiments of the present application, the light data includes starting points and directions of a plurality of rays detected by the illumination probes (namely, lighting probes).

In this embodiment of this application, the illumination probes are illumination detectors placed in the scene, and may also be understood as three-dimensional sensing points that can sense illumination. Correspondingly, the terminal may obtain light data in the scene through the illumination probes.

**202: The terminal determines a first ray, a second ray, and first indirect illumination data of the plurality of rays based on the light data, the first ray being a ray that hits a pixel in a current screen space in the scene, the second ray being a ray that does not hit a pixel in the current screen space, and the first indirect illumination data being indirect illumination data of the hit pixel. In embodiments of the present application, step 202 can also be considered as following operations: determining, based on the light data and from the plurality of rays, a first ray reaching a pixel in a current screen space in the scene, a second ray missing all pixels in the current screen space in the scene, and first indirect illumination data which is indirect illumination data of the pixel reached by the first ray.**

In this embodiment of this application, the terminal uses the ray that hits the pixel as the first ray, uses the ray that does not hit the pixel as the second ray, and obtains indirect illumination data of the pixel hit by the first ray. The terminal detects, based on the light data, rays in the scene, to obtain the first ray and the second ray.

In this embodiment of this application, illumination data of a pixel includes indirect illumination data and direct illumination data. The direct illumination data of the pixel is illumination data generated when the light source in the scene directly illuminates the pixel. The indirect illumination data of the pixel is illumination data generated when the light source first illuminates another pixel, and after being reflected once, twice, or a plurality of times, finally reaches the pixel, that is, the indirect illumination data is obtained based on reflection of light.

**203: The terminal obtains an element (e.g., a screen element) hit by the second ray in the current screen space and outside the current screen space, and obtains second indirect illumination data from an illumination buffer library of the element, the second indirect illumination data being indirect illumination data of the element. In embodiments of the present application, step 203 can also be considered as following operations: obtaining a screen element reached by the second ray in the current screen space and a screen element reached by the second ray outside the current screen space, and obtaining second indirect illumination data from an illumination buffer library of the screen element, the second indirect illumination data being indirect illumination data of the screen element.**

In this embodiment of this application, the scene includes one or more elements, and the element includes at least one of a surfel and a voxel. The surfel is a facet configured for describing a surface of an object, that is, a smallest unit configured for describing the surface of the object. The surfel has a specific area. The voxel is a small element configured for describing a volume of the object, that is, a smallest unit configured for describing the volume of the object. In addition, one or more objects may be included in the scene. In embodiments of the present application, the illumination buffer library stores a plurality of elements in the scene and indirect illumination data of the plurality of elements; and the illumination buffer library includes a pixel buffer library and a surfel buffer library.

In this embodiment of this application, the current screen space refers to a space corresponding to a screen configured to display the scene, and outside the current screen space is a space outside the current screen space in the scene. When the scene is displayed through the current screen space, a part of a surface of the scene is located in the current screen space and may be displayed through the current screen space, and another part of the surface of the scene is located outside the current screen space and cannot be displayed through the current screen space.

In this embodiment of this application, the second ray does not hit a pixel in the current screen space, but the second ray may hit an element in the current screen space and an element outside the current screen space.

**204: The terminal performs lighting rendering on the scene based on the first indirect illumination data and the second indirect illumination data.**

Illumination rendering (namely, lighting rendering) refers to generating a realistic image when a computer simulates transmission and reflection of light in the scene. A function of illumination rendering is to make the generated image more realistic and natural, so that an observer can better understand and feel an object in the scene. Illumination rendering includes adding a light source and simulating an illumination effect in the real world through tracing and computing on the light, thereby improving reality and vividness of the scene. The scene is generally formed by a three-dimensional model. The three-dimensional model has a material and a texture. When light enters the scene, the light is affected by the material and the texture of a surface of the model. In this way, different reflection and refraction effects are generated. A color and brightness of each pixel may be obtained through calculation of these effects. In this way, a realistic image is generated.

In this embodiment of this application, after performing illumination rendering on the scene based on the first indirect illumination data and the second indirect illumination data, the terminal obtains a scene rendered with the indirect illumination data. In some embodiments, the terminal performs illumination rendering on the scene with reference to the first indirect illumination data, the second indirect illumination data, and the direct illumination data, to implement global illumination rendering on the scene. Alternatively, the terminal performs, based on the first indirect illumination data and the second indirect illumination data, illumination rendering on a scene rendered with the direct illumination data, to implement global illumination rendering on the scene.

In a global illumination technology in the related art, before indirect illumination data of each piece of illumination is determined, generally, the direct illumination data of the pixel is first calculated, and then the indirect illumination data of the pixel is obtained by using a light tracing technology for a screen space. In this way, global illumination rendering in the screen space is implemented. However, this technology can only be used to obtain indirect illumination data from reflection in a screen. As a result, the indirect illumination data is incomplete, and accuracy of the indirect illumination data is reduced, causing inaccurate illumination rendering on the scene.

The embodiments of this application provide an illumination rendering method. In the method, the illumination probe is configured to determine the ray that hits the pixel and the ray that does not hit the pixel, and obtain the indirect illumination data of the hit pixel. For the ray that does not hit the pixel, an element hit by the ray in the current screen space and outside the current screen space is obtained, and indirect illumination data of the hit element is obtained. In this way, in this method, illumination rendering is performed through the indirect illumination data of the pixel and the indirect illumination data of the element, so that the indirect illumination data of the element is effectively added to the indirect illumination data of the pixel. In addition, the indirect illumination data of the element further includes indirect illumination data outside the current screen space, thereby further improving comprehensiveness and accuracy of the indirect illumination data. Further, illumination rendering is performed on the scene based on the indirect illumination data, so that accuracy of illumination rendering can be improved.

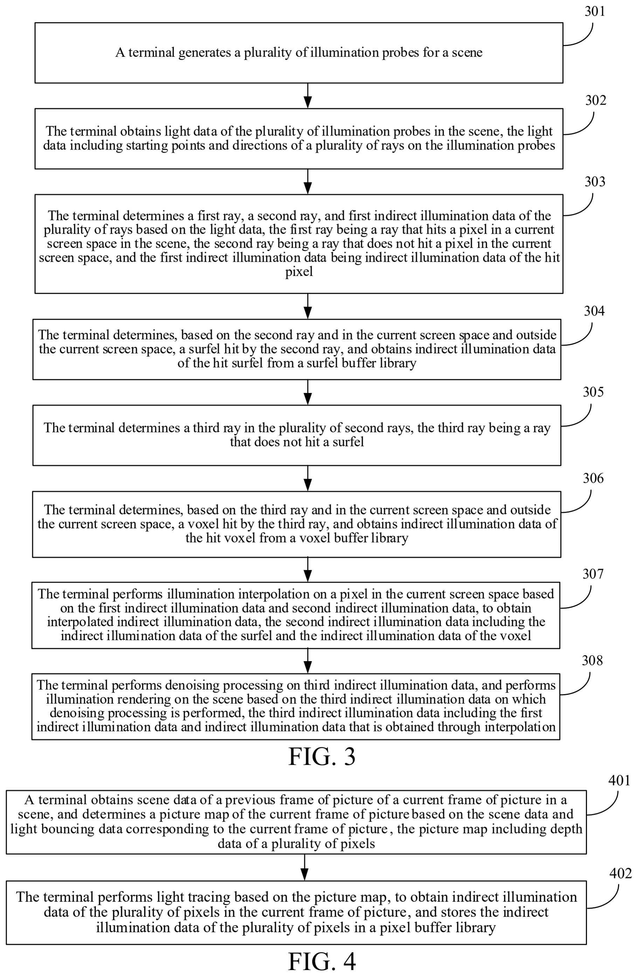

The foregoing describes, based on the embodiment of FIG. 2, a basic process of illumination rendering. The following further describes, based on the embodiment of FIG. 3, the process of illumination rendering. FIG. 3 is a flowchart of an illumination rendering method according to an embodiment of this application. The method includes following operations.

**301: A terminal generates a plurality of illumination probes for a scene.**

In this embodiment of this application, an example in which the illumination probes are screen space probes is used for description. A quantity and positions of the plurality of illumination probes may be set and changed according to requirements. The plurality of illumination probes may be uniformly distributed, or may be adaptively distributed. This is not specifically limited herein.

In this embodiment of this application, the illumination probes are illumination detectors placed in a scene. The illumination probes may also be understood as three-dimensional sensing points. The sensing points may sense illumination data passing through the sensing points, and can be configured to provide high-quality illumination data including indirect illumination for an object in a virtual scene. The illumination probes may be further generated based on a world space. After probe illumination data at a position of each illumination probe is determined, illumination data at any point in the scene may be obtained based on probe illumination data of at least one illumination probe closest to the any point and an interpolation method.

**302: The terminal obtains light data of the plurality of illumination probes in the scene, the light data including starting points and directions of a plurality of rays on the illumination probes.**

In this embodiment of this application, the terminal generates rays for the plurality of illumination probes, to obtain the light data of the plurality of illumination probes. In some embodiments, the terminal generates the rays according to an importance sampling method, to obtain the light data of the plurality of illumination probes. The importance sampling method includes, but is not limited to, a cos-weighted method (an importance sampling method), a bidirectional reflectance distribution function (BRDF), and a historical illumination method. Details are not described herein again.

In some embodiments, the illumination probe is a sphere. Correspondingly, the starting points of the plurality of rays on the illumination probe are center points of the illumination probe. Alternatively, the starting points of the plurality of rays are uniformly distributed on a surface of the illumination probe, and are respectively located at a plurality of positions on the surface of the illumination probe. The plurality of positions may be directly above, directly below, directly to the left, directly to the right, or the like. The directions of the plurality of rays may be set and changed according to requirements. This is not specifically limited herein.

**303: The terminal determines a first ray, a second ray, and first indirect illumination data of the plurality of rays based on the light data, the first ray being a ray that hits a pixel in a current screen space in the scene, the**

**second ray being a ray that does not hit a pixel in the current screen space, and the first indirect illumination data being indirect illumination data of the hit pixel.**

In some embodiments, the terminal detects rays in the scene by using a screen space algorithm, to obtain the first ray and the second ray. A ray has a first preset distance. The terminal uses a pixel hit by the first ray within the first preset distance as a pixel hit by the first ray. The pixel hit by the first ray within the first preset distance refers to a pixel that is on the first ray and that is located between a vertex of the first ray and a first target position, or a pixel that is on the first ray and that is located at the first target position. The first target position is a position whose distance to the vertex of the first ray is equal to the first preset distance.

Correspondingly, the terminal determines coordinate information of the pixel hit by the first ray. The terminal obtains, based on the coordinate information of the pixel, indirect illumination data of the pixel. In some embodiments, the terminal obtains, based on coordinate information of a starting point of the first ray, a direction of the first ray, and a first hit distance, the coordinate information of the hit pixel. That is, the coordinate information of the starting point is extended in the direction, an extended distance is equal to the first hit distance, and coordinate information obtained after extension is the coordinate information of the hit pixel. The first hit distance is a distance between the starting point of the first ray and the hit pixel. The first hit distance may be obtained in a process of detecting rays by using the screen space algorithm, or may be obtained in another manner. This is not limited in this embodiment of this application.

In this embodiment of this application, the first indirect illumination data is obtained from a pixel buffer library, and the pixel buffer library stores a plurality of pixels in the scene and indirect illumination data of the plurality of pixels. In some embodiments, the pixel buffer library correspondingly stores coordinate information and the indirect illumination data of the plurality of pixels. Correspondingly, the terminal obtains, based on the coordinate information of the hit pixel, the indirect illumination data of the hit pixel from the pixel buffer library. In some embodiments, a process of obtaining the pixel buffer library is implemented through the following embodiment of FIG. 4. Details are not described herein again.

In reality, illumination received by a surface of an object is not only from a light source, but also includes illumination from reflection of another object. The illumination from the light source is direct illumination, and the illumination from the another object is indirect illumination. A global illumination effect includes an effect of the direct illumination and an effect of the indirect illumination. Direct illumination data refers to illumination brightness that is obtained when the light source directly illuminates the object and is reflected to a virtual observation point or a camera viewpoint. Indirect illumination data refers to illumination brightness that is obtained when the light source first illuminates the another object, after being reflected once, twice, or a plurality of times, finally reaches a surface of an observed object, and then is reflected to the virtual observation point or the camera viewpoint.

In some embodiments, after performing ray detection, the terminal reorganizes data of the plurality of rays, to obtain the first ray and the second ray, and repacks and compresses a plurality of second rays together. In this way, after being compressed, the plurality of second rays are placed in a contiguous space, to facilitate subsequent detection based on the second ray.

**304: The terminal determines, based on the second ray and in the current screen space and outside the current screen space, a surfel hit by the second ray, and obtains indirect illumination data of the hit surfel from a surfel buffer library.**

In some embodiments, the terminal detects surfels in the scene by using a signed distance field (SDF) method or a ray query method, to determine the surfel hit by the second ray. A ray has a second preset distance. The terminal uses a surfel hit by the second ray within the second preset distance as the surfel hit by the second ray. The surfel hit by the second ray within the second preset distance refers to a surfel that is on the second ray and that is located between a vertex of the second ray and a second target position, or a surfel that is on the second ray and that is located at the second target position. The second target position is a position whose distance to the vertex of the second ray is equal to the second preset distance.

In this embodiment of this application, the terminal determines, based on the second ray, coordinate information of the hit surfel, and further obtains, based on the coordinate information, the indirect illumination data of the hit surfel from the surfel buffer library. In some embodiments, the terminal obtains, based on coordinate information of a starting point of the second ray, a direction of the second ray, and a second hit distance, the coordinate information of the hit surfel. That is, the coordinate information of the starting point is extended in the direction, an extended distance is equal to the second hit distance, and coordinate information obtained after extension is the coordinate information of the hit surfel. The coordinate information includes, but is not limited to, a coordinate of a center point, a radius, a normal, and the like of the surfel. The second hit distance refers to a distance between the starting point of the second ray and the hit surfel. The second hit distance may be obtained in a process of detecting surfels, or may be obtained in another manner. This is not limited in this embodiment of this application.

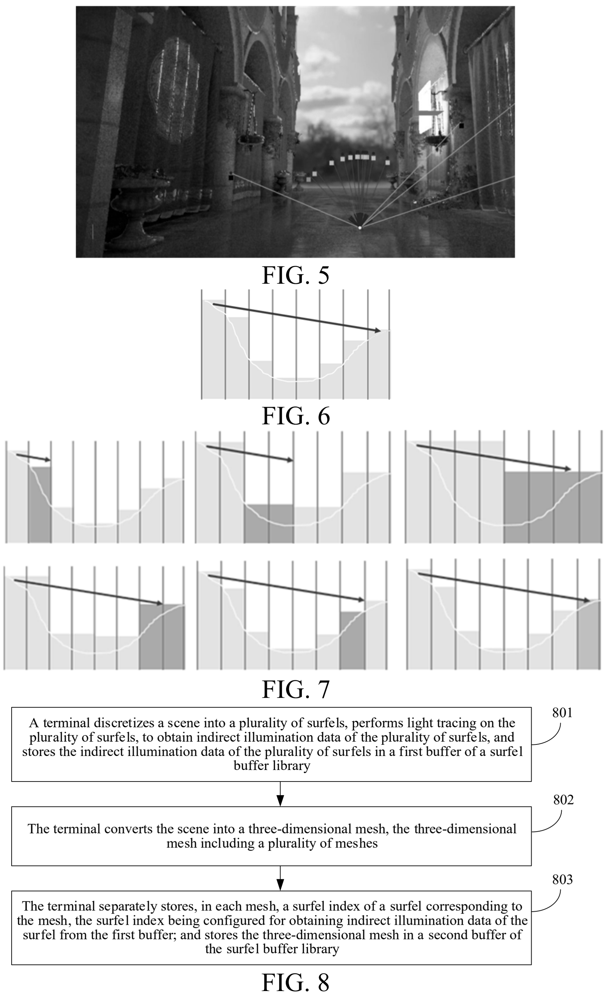

In this embodiment of this application, the surfel buffer library stores a plurality of surfels in the scene and indirect illumination data of the plurality of surfels. In some embodiments, the surfel buffer library correspondingly stores coordinate information and the indirect illumination data of the plurality of surfels. In some embodiments, a process of obtaining the surfel buffer library is implemented through the following embodiment of FIG. 8. Details are not described herein again.

In some embodiments, the terminal further determines a hit ratio of the pixels based on a ratio of a quantity of the first rays to a total quantity of rays. The total quantity of rays refers to a sum of the quantity of the first rays and a quantity of the second rays. When the hit ratio is not greater than a first reference hit ratio, operation 304 is performed. When the hit ratio is greater than the first reference hit ratio, operation 304 is no longer performed, that is, illumination rendering is performed based on the first indirect illumination data, and the indirect illumination data of the surfels is no longer considered. In this embodiment, flexibility of illumination rendering is improved, and rendering efficiency is improved when a data amount of the indirect illumination data is ensured.

**305: The terminal determines a third ray in the plurality of second rays, the third ray being a ray that does not hit a surfel.**

In this embodiment of this application, after performing detection based on the second ray, the terminal reorganizes data of the plurality of second rays, to obtain a plurality of third rays, and repacks and compresses the plurality of third rays together. In this way, after being compressed, the plurality of third rays are placed in a contiguous space, to facilitate subsequent detection based on the third ray.

**306: The terminal determines, based on the third ray and in the current screen space and outside the current screen space, a voxel hit by the third ray, and obtains indirect illumination data of the hit voxel from a voxel buffer library.**

In some embodiments, the terminal detects voxels in the scene by using the SDF method, the ray query method, or a cone trace method, to determine the voxel hit by the third ray. A ray has a third preset distance. The terminal uses a voxel hit by the third ray within the third preset distance as the voxel hit by the third ray. The voxel hit by the third ray within the third preset distance refers to a voxel that is on the third ray and that is located between a vertex of the third ray and a third target position, or a pixel that is on the third ray and that is located at the third target position. The third target position is a position whose distance to the vertex of the third ray is equal to the third preset distance.

In this embodiment of this application, the terminal determines, based on the third ray, coordinate information of the hit voxel, and further obtains, based on the coordinate information, the indirect illumination data of the hit voxel from the voxel buffer library. In some embodiments, the terminal obtains, based on coordinate information of a starting point of the third ray, a direction of the third ray, and a third hit distance, the coordinate information of the hit voxel. That is, the coordinate information of the starting point is extended in the direction, an extended distance is equal to the third hit distance, and coordinate information obtained after extension is the coordinate information of the hit voxel. The third hit distance refers to a distance between the starting point of the third ray and the hit voxel. The third hit distance may be obtained in a process of detecting voxels, or may be obtained in another manner. This is not limited in this embodiment of this application.

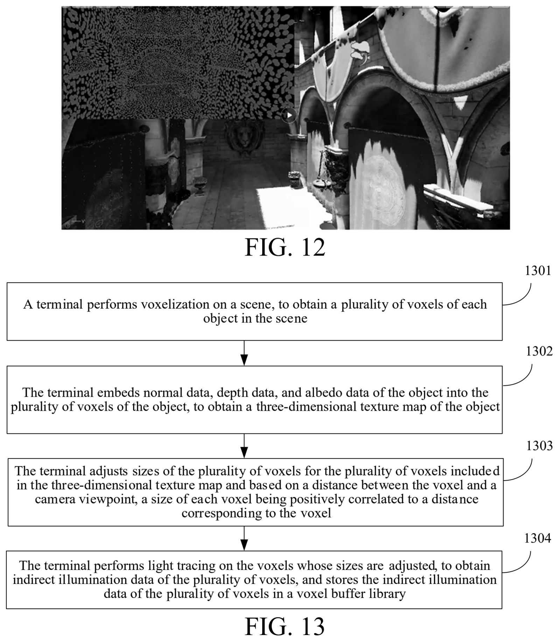

In this embodiment of this application, the voxel buffer library stores a plurality of voxels in the scene and indirect illumination data of the plurality of voxels. In some embodiments, the voxel buffer library correspondingly stores coordinate information and the indirect illumination data of the plurality of voxels. In some embodiments, a process of obtaining the voxel buffer library is implemented through the following embodiment of FIG. 13. Details are not described herein again.

In some embodiments, the terminal further determines, based on a ratio of a quantity of the third rays to the quantity of the second rays, a hit ratio of the surfels. When the hit ratio is not greater than a second reference hit ratio, operation 306 is performed. When the hit ratio is greater than the second reference hit ratio, operation 306 is no longer performed, that is, illumination rendering is performed based on the first indirect illumination data and the indirect illumination data of the surfels, and the indirect illumination data of the voxels is no longer considered. In this embodiment, the flexibility of illumination rendering is improved, and the rendering efficiency is improved when the data amount of the indirect illumination data is ensured.

In this embodiment of this application, a process of obtaining an element hit by the second ray in the current screen space and outside the current screen space, and obtaining second indirect illumination data from an illumination buffer library of the element (namely, obtaining a screen element reached by the second ray in the current screen space and a screen element reached by the second ray outside the current screen space, and obtaining second indirect illumination data from an illumination buffer library of the screen element) is implemented through the foregoing operation 304 to operation 306. The second indirect illumination data includes at least one of the indirect illumination data of the surfel hit by the second ray, and indirect illumination data of a voxel hit by the second ray. In this implementation, the surfels are first detected based on the second ray, and then the voxels are detected for a ray that does not hit a surfel. In this way, repeated detection on the surfels and the voxels by the second ray is avoided, and detection comprehensiveness is ensured, thereby improving comprehensiveness and accuracy of obtained indirect illumination data.

The foregoing operation 304 to operation 306 are merely an implementation of the process of obtaining the element hit by the second ray in the current screen space and outside the current screen space, and obtaining the second indirect illumination data from the illumination buffer library of the element. The terminal may further implement the process in another exemplary manner.

In an implementation, the process in which the terminal obtains the element hit by the second ray in the current screen space and outside the current screen space, and obtains the second indirect illumination data from the illumination buffer library of the element includes at least one of the following: The terminal determines, in the current screen space and outside the current screen space, the surfel hit by the second ray, and obtains the indirect illumination data of the hit surfel from the surfel buffer library. The terminal determines, in the current screen space and outside the current screen space, the voxel hit by the second ray, and obtains the indirect illumination data of the hit voxel from the voxel buffer library.

In a possible implementation, when the element shown in this embodiment of this application includes only the surfel, the terminal detects the surfel based only on the second ray, to obtain the indirect illumination data of the surfel. When the element shown in this embodiment of this application includes only the voxel, the terminal detects the voxel based only on the second ray, to obtain the indirect illumination data of the voxel. When the element shown in this embodiment of this application includes the surfel and the voxel, the surfel and the voxel are separately detected based on the second ray, to obtain the indirect illumination data of the surfel and the voxel. In this implementation, flexibility and efficiency of detection are improved, and flexibility and efficiency of obtaining the indirect illumination data are further improved.

In another implementation, the terminal first detects the voxel, and then detects the surfel. Correspondingly, the terminal detects, based on the second ray and in the current screen space and outside the current screen space, the voxel, to obtain the voxel hit by the second ray, and obtains the indirect illumination data of the hit voxel from the voxel buffer library; determines a fourth ray in the plurality of second rays, the fourth ray being a ray that does not hit a voxel; and detects, based on the fourth ray and in the current screen space and outside the current screen space, the surfel, to obtain a surfel hit by the fourth ray, and obtains the indirect illumination data of the hit surfel from the surfel buffer library. In this implementation, the voxel is first detected based on the second ray, and then the surfel is detected for a ray that does not hit a voxel. In this way, the repeated detection on the surfel and the voxel by the second ray is avoided, and the detection comprehensiveness is ensured, thereby improving the comprehensiveness and the accuracy of the obtained indirect illumination data.

307: The terminal performs illumination interpolation on a pixel in the current screen space based on the first indirect illumination data and the second indirect illumination data, to obtain interpolated indirect illumination data, the second indirect illumination data including the indirect illumination data of the surfel and the indirect illumination data of the voxel.

In this embodiment of this application, the terminal performs illumination interpolation on the pixel in the current screen space, to obtain indirect illumination data of diffuse reflection and indirect illumination data of glossy reflection in the current screen space.

In some embodiments, before performing illumination interpolation, the terminal further performs temporal-spatial filtering on the illumination probe. The temporal-spatial filtering includes filtering in time and space, to reduce noises and accelerate convergence.

When the element shown in this embodiment of this application includes only the surfel, operation 305 and operation 306 are not performed. Therefore, the second indirect illumination data includes the indirect illumination data of the surfel, but does not include the indirect illumination data of the voxel. When the element shown in this embodiment of this application includes only the voxel, operation 304 is not performed. Therefore, the second indirect illumination data includes the indirect illumination data of the voxel, but does not include the indirect illumination data of the surfel.

308: The terminal performs denoising processing on third indirect illumination data, and performs illumination rendering on the scene based on the third indirect illumination data on which denoising processing is performed, the third indirect illumination data including the first indirect illumination data and indirect illumination data that is obtained through interpolation.

In some embodiments, the terminal performs denoising processing through a denoiser.

In this embodiment of this application, a process of performing illumination rendering on the scene based on the first indirect illumination data and the indirect illumination data that is obtained through interpolation is implemented through operation 308. In this implementation, noise data is removed through denoising processing, so that accuracy of the indirect illumination data is improved, and quality of a rendered picture may be improved.

The denoising processing process in the foregoing operation 308 is an implementation. After performing operation 307, the terminal may further perform illumination rendering on the scene based on the first indirect illumination data and the indirect illumination data that is obtained through interpolation, thereby improving the rendering efficiency.

Correspondingly, operation 307 is also an implementation of a process of performing illumination rendering on the scene based on the first indirect illumination data and the second indirect illumination data. The terminal may further assign the second indirect illumination data of the element in the current screen space to an element at a corresponding position, to perform, based on the indirect illumination data of the pixel, rendering on the scene.

The terminal implements global illumination based on the indirect illumination data and the direct illumination data. Correspondingly, the performing illumination rendering on the scene includes the following operations: obtaining, by the terminal, direct illumination data of the scene; determining global illumination data based on the first indirect illumination data, the second indirect illumination data, and the direct illumination data; and performing illumination rendering on the scene based on the global illumination data. The direct illumination data of the scene, indirect illumination data of the pixel hit by the first ray in the current screen space, and indirect illumination data of the element hit by the second ray in the current screen space and outside the current screen space are comprehensively considered in the global illumination data. Therefore, the global illumination data is illumination data close to a real scene, has higher accuracy, and can more vividly display an illumination effect in the real scene. Therefore, efficient real-time global rendering on the scene is implemented based on the illumination data close to the real scene. In some embodiments, the terminal superimposes the third indirect illumination data and the direct illumination data, to obtain the global illumination data, and performs illumination rendering on the scene based on the global illumination data.

In this embodiment of this application, an illumination rendering process may be implemented through a rendering engine on the terminal. The rendering engine may provide a plurality of light source scenes, a plurality of rendering materials, and the like, to implement global illumination rendering on the scene.

The embodiments of this application provide an illumination rendering method. In this method, the illumination probe is configured to first determine the ray that hits the pixel and the ray that does not hit the pixel in the current screen space, and obtain the indirect illumination data of the hit pixel. For the ray that does not hit the pixel, an element, such as a surfel or a voxel, hit by the ray in the current screen space and outside the current screen space is obtained, and indirect illumination data of the hit element is obtained. In this way, in this method, illumination rendering is performed through the indirect illumination data of the hit pixel and the indirect illumination data of the element, so that the indirect illumination data of the element is effectively added to the indirect illumination data of the pixel. In addition, the indirect illumination data of the element further includes indirect illumination data of a hit element outside the current screen space, thereby further improving comprehensiveness and accuracy of the indirect illumination data. Further, illumination rendering is performed on the scene based on the indirect illumination data, so that accuracy of illumination rendering can be improved.

FIG. 4 is a flowchart of a method for obtaining a pixel buffer library according to an embodiment of this application. The method includes the following operations.

**401: A terminal obtains scene data of a previous frame of picture of a current frame of picture in a scene, and determines a picture map of the current frame of picture based on the scene data and light bouncing data corresponding to the current frame of picture, the picture map including depth data of a plurality of pixels.**

In this embodiment of this application, the scene is a virtual scene in a video frame, and different pictures are formed with movement or rotation of the virtual scene or movement or rotation of a virtual camera. The light bouncing data is configured for indicating bouncing data of light on the plurality of pixels. The bouncing data includes a bouncing angle, a bouncing distance, and the like of the light.

The terminal performs rendering on the scene data of the previous frame of picture based on the light bouncing data corresponding to the current frame of picture, to obtain the picture map of the current frame of picture. The picture map of the current frame is formed by the plurality of pixels, and includes the depth data of the plurality of pixels.

For example, FIG. 5 is a schematic diagram of light bouncing in a scene according to an embodiment of this application.

**402: The terminal performs light tracing based on the picture map, to obtain indirect illumination data of the plurality of pixels in the current frame of picture, and stores the indirect illumination data in the pixel buffer library.**

In some embodiments, the terminal performs light tracing based on a hierarchical Z-buffer (HZB) method. For generation of the HZB, not only a furthest policy is supported but also a closest policy is supported, which may be set according to requirements. For example, code corresponding to a light tracing process is:

```
Stackless ray walk of min-Z pyramid;
mip=0;
while (level>-1)
step through current cell;
if (above Z plane)++level;
if (below Z plane)-level.
```

The code indicates a stackless pyramid ray walking method with a minimum depth. First, the level is set to 0. When the level is greater than -1, a current grid is stepped through. If the level is above a plane Z, the level is increased, and if the level is below the plane Z, the level is decreased. Further, a schematic diagram of a starting point of a ray corresponding to code corresponding to the light tracing process is shown in FIG. 6.

In this embodiment of this application, light tracing is performed in an iteration method. Pixel precision at a plurality of levels is set on the terminal. The pixel precision at the plurality of levels respectively corresponds to different quantities of pixels. For example, the pixel precision at the plurality of levels sequentially corresponds to one pixel, two pixels, and four pixels in descending order of precision. First, light tracing is performed based on pixel precision at a first level, to determine whether a ray at the first level intersects with a pixel. If not, light tracing is performed based on pixel precision at a second level, to determine whether the ray intersects with the pixel. The pixel precision at the second level is lower than the pixel precision at the first level. If not, light intersection is performed based on pixel precision at a next level, and the foregoing process is repeated, to gradually reduce the pixel precision until an intersection occurs. In this case, the intersection means that a ray intersects with a plurality of pixels at a specific level. Therefore, the pixel precision is improved based on a direction and a starting point of the ray during the intersection, to determine a specific pixel to be intersected with.

For example, FIG. 7 is a schematic diagram of an iteration process according to an embodiment of this application. The iteration process corresponds to the code shown in FIG. 6. Pixel precision at the plurality of levels are pixel precision respectively corresponding to one pixel, two pixels, and four pixels, and are respectively named mip0, mip1, and mip2. It can be learnt from the figure that, a terminal first performs light tracing based on the pixel precision mip0, and a ray does not intersect with a pixel. Then, light tracing is performed based on the pixel precision mip1, and the ray does not intersect with the pixel either. Then, light tracing is performed based on the pixel precision mip2, and intersection occurs. However, because the pixel precision in this case corresponds to four pixels, which pixel in the four pixels is specifically intersected with needs to be determined. Therefore, based on a starting point and a direction of a ray corresponding to the pixel precision mip2, light tracing is first performed based on the pixel precision mip1, to obtain two pixels with which the ray intersects, and then light tracing is performed based on the pixel precision mip0, to obtain one pixel with which the ray intersects. Correspondingly, levels of pixel precision corresponding to the iteration process are sequentially: mip0-mip1-mip2-mip1-mip0-mip0.

In this embodiment of this application, the pixel buffer library is obtained through the foregoing operation 401 and operation 402, to implement screen space illumination buffering. This facilitates subsequent obtaining of the indirect illumination data of the pixel from the pixel buffer library, improves efficiency of obtaining the indirect illumination data, and further improves efficiency of illumination rendering.

Operation 401 and operation 402 are merely an implementation of obtaining the pixel buffer library, and the pixel buffer library may be further obtained in another implementation. Details are not described herein again.

FIG. 8 is a flowchart of a method for obtaining a surfel buffer library according to an embodiment of this application. The method includes the following operations.

**801: A terminal discretizes a scene into a plurality of surfels, performs light tracing on the plurality of surfels, to obtain indirect illumination data of the plurality of surfels, and stores the indirect illumination data of the plurality of surfels in a first buffer of a surfel buffer library.**

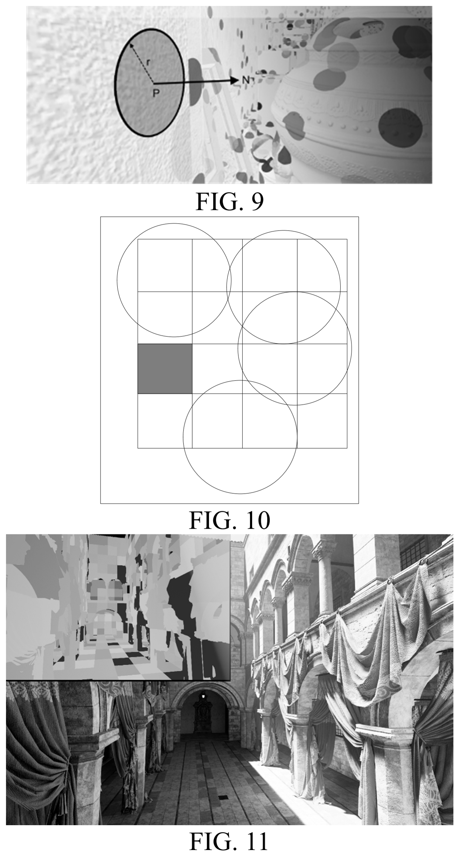

The surfel is essentially a storage structure of a surface cache. The surfel discretizes an entire scene surface, and surface information of a center point is approximately diffused as information of the entire surfel. Surfel data of the surfel includes a coordinate of a center point, a radius, a normal, a base color, and the like. In some embodiments, to satisfy various feature development requirements, parameters such as a surfel identifier, an instance identifier, and a bidirectional reflectance distribution function (BRDF) may also be added to the surfel data. In some embodiments, a data amount of data content stored in the surfel data does not exceed a reference threshold. For example, FIG. 9 is a schematic diagram of a surfel according to an embodiment of this application. The surfel is in a shape of a circle and is a facet configured for describing a surface of an object. The surfel data includes a coordinate P of a center point, a radius r, a normal PN, and the like of the surfel.

The terminal performs light tracing on the surfel based on the surfel data of the surfel and information about a light source in the scene, to obtain indirect illumination data of the surfel. In some embodiments, the terminal performs light tracing on the surfel in a bounding volume hierarchy (BVH) method.

In some embodiments, the terminal generates the surfel based on a screen space. Correspondingly, the discretizing the scene into the plurality of surfels includes: dividing the scene into a plurality of blocks, that is, dividing each preset quantity of pixels in the screen space into one block, pixels in the plurality of blocks being covered by the surfels, a target pixel having a minimum surfel coverage in the plurality of pixels being recorded in each block, and the surfels being updated based on a surfel coverage condition; and correspondingly determining, for each block, the target pixel having the minimum surfel coverage in the block, and generating, when the surfel coverage of the target pixel does not satisfy a coverage threshold, a surfel at the target pixel, until surfel coverages of the plurality of pixels in the block separately satisfy the coverage threshold. That is, when the surfel coverage of the target pixel does not satisfy the coverage threshold, after the surfel is generated at the target pixel, for each block, the operation of "determining the target pixel having the minimum surfel coverage in the block, and generating, when the surfel coverage of the target pixel does not satisfy a coverage threshold, a surfel at the target pixel" is repeatedly performed. In this way, after the operation is performed repeatedly for one or more times, it is ensured that the surfel coverages of the plurality of pixels in the block separately satisfy the coverage threshold.

Generating a surfel at the target pixel refers to generating a new surfel at the target pixel. In a process of generating a surfel, information such as a base color and a normal of the surfel is obtained from the first buffer (GBuffer) based on a screen space position of the point. A world space coordinate of the point is reconstructed with reference to depth information, and the minimum surfel coverage of the block is also updated. If the minimum surfel coverage corresponding to each block is sufficiently large, generation is stopped. In this embodiment of this application, during each generation process, the minimum surfel coverages recorded in the blocks are traversed. Through iterative update of the surfels, it is ensured that each pixel in the screen space is covered, and excessive surfels are not generated.

The surfel coverage refers to a quantity of surfels covered on a pixel. For example, if the pixel is covered by three surfels, the surfel coverage is 3. For example, FIG. 10 is a schematic diagram of a relationship between a surfel and a pixel according to an embodiment of this application. For example, FIG. 11 is a heatmap of surfel distribution according to an embodiment of this application. Heat represents a distribution density degree of the surfels, and different shades of colors represent different heat.

**802: The terminal converts the scene into a three-dimensional mesh, the three-dimensional mesh including a plurality of meshes.**

The terminal performs mesh division on a space corresponding to the scene, and divides the space into meshes having a same size, to obtain the three-dimensional mesh. A shape of each mesh may be a cube or a cuboid. Each mesh corresponds to one storage space, and the storage space is configured for storing data of a surfel, for example, configured for storing a surfel index of the surfel. In some embodiments, the terminal stores the data of the surfel in a spatial hashing manner.

**803: The terminal separately stores, in each mesh, a surfel index of a surfel corresponding to the mesh, the surfel index being configured for obtaining indirect illumination data of the surfel from the first buffer; and stores the three-dimensional mesh in a second buffer of the surfel buffer library.**

In some embodiments, to reduce a waste of storage resources, the terminal screens, from the plurality of meshes in the second buffer, a mesh that does not store the surfel index, and deletes the mesh that does not store the surfel index. In this embodiment of this application, for space mesh division, because the surfel is attached to the surface of the object, many meshes are empty. Therefore, a mesh compression pass is added to discard a mesh without information inside, thereby reducing a bandwidth and reducing occupation of the storage resources.

For example, FIG. 12 is a schematic diagram of discrete surfels in a scene according to an embodiment of this application. At an upper left corner, there is a schematic diagram of surfels in the scene shown in FIG. 12. The scene is discretized into the plurality of surfels.

In this embodiment of this application, an example in which the indirect illumination data of the surfel is first obtained, and then the plurality of surfels are stored in the surfel buffer library is used for description. In some other embodiments, first, the surfel data of the surfels is stored in the first buffer, the surfel index is stored in the three-dimensional mesh, and the three-dimensional mesh are stored in the second buffer. Then, light tracing is performed on the stored surfels, to obtain the indirect illumination data of the surfels, and store the indirect illumination data in the surfel buffer library. This is not specifically limited herein.

In this embodiment of this application, the surfel buffer library is obtained through the foregoing operation 801 to operation 803, to implement illumination buffering of the discrete surfels. This facilitates subsequent obtaining of the indirect illumination data of the surfels from the surfel buffer library, improves efficiency of obtaining the indirect illumination data, and further improves efficiency of illumination rendering.

Operation 801 to operation 803 are merely an implementation of obtaining the surfel buffer library, and the surfel buffer library may be further obtained in another implementation. Details are not described herein again.

FIG. 13 is a flowchart of a method for obtaining a voxel buffer library according to an embodiment of this application. The method includes the following operations.

**1301: A terminal performs voxelization on a scene, to obtain a plurality of voxels of each object in the scene.**

Voxelization is a process of converting a surface geometry representation form of an object into a voxel representation form. A result of voxelization is that a voxel mesh is generated. The voxel mesh includes a plurality of voxels of the object, and each voxel not only includes surface information of an object model, but also can describe an attribute inside the object model. Through voxelization, unordered point cloud data may be converted into ordered data for representation, which helps simplify or change a form of data for further analysis and processing.

In some embodiments, the terminal implements voxelization on the scene in a rasterization method. In a process in which the terminal performs voxelization on the scene in the rasterization method, rasterization rendering is performed on a camera along three axial directions, namely, x, y, and z, of the scene for three times. In some embodiments, when rasterization rendering is performed, attributes such as occlusion culling and back-surface culling are turned off, to obtain the plurality of voxels of each object in the scene, and the plurality of voxels are configured for forming the object.

**1302: The terminal embeds normal data, depth data, and albedo data of the object into the plurality of voxels of the object, to obtain a three-dimensional texture map of the object.**

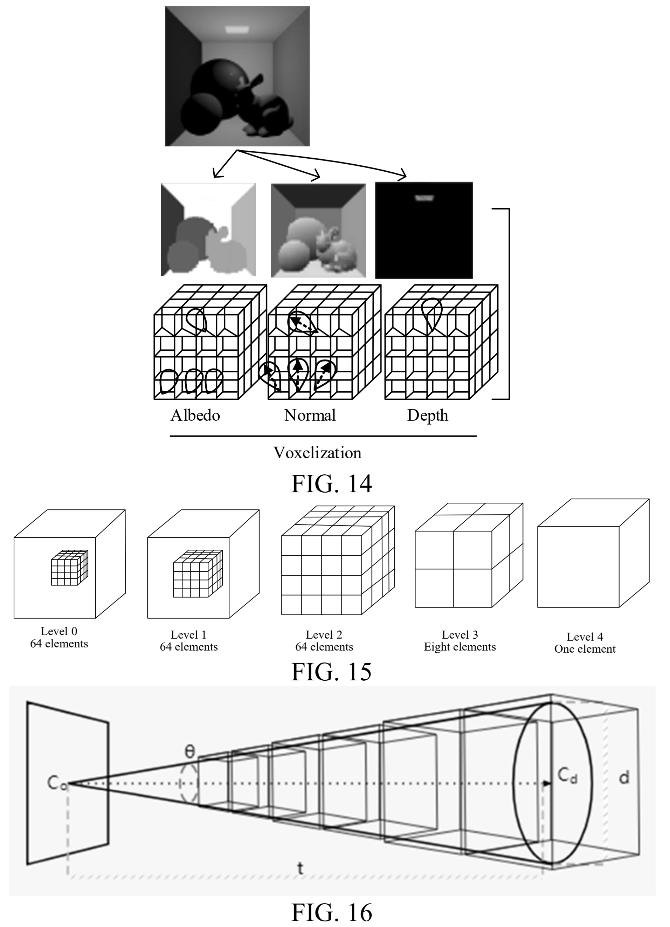

In some embodiments, that the terminal embeds the normal data, the depth data, and the albedo data of the object into the plurality of voxels of the object, to obtain the three-dimensional texture map of the object includes: The normal data, the depth data, and the albedo data of the object are stored into a three-dimensional texture in a voxelized pixel shader, so that the normal data, the depth data, and the albedo data of the object are embedded into the plurality of voxels of the object, to obtain the three-dimensional texture map of the object. In some embodiments, the terminal implements the process through an unordered access view (UAV). For example, FIG. 14 is a schematic diagram of a three-dimensional texture map according to an embodiment of this application. The normal data, the depth data, and the albedo data are embedded into the voxels.

The albedo is also referred to as reflectivity, is a physical quantity representing a degree of reflection of light by the object, and is a ratio of energy reflected by light on a surface of the object to energy injected by light on the surface of the object. The albedo may be used to represent optical features, such as a color, a diffuse reflection degree, and a specular reflection degree of the object, of the surface of the object.

1303: The terminal adjusts sizes of the plurality of voxels for the plurality of voxels included in the three-dimensional texture map and based on a distance between the voxel and a camera viewpoint, a size of each voxel being positively correlated to a distance corresponding to the voxel.

In this embodiment of this application, the size of each voxel being positively correlated to the distance corresponding to the voxel means that a closer distance to the camera viewpoint indicates a smaller size of the voxel, and a farther distance to the camera viewpoint indicates a larger size of the voxel.

In this embodiment of this application, if voxelization data is stored by using a simple three-dimensional texture map, video memory occupation is large. Therefore, a multi-level texture map is used to adjust the size of the voxel. In this way, the closer distance to the camera viewpoint indicates a smaller radius of the voxel, and the farther distance to the camera viewpoint indicates a larger radius of the voxel, thereby achieving effects of high precision near the camera viewpoint and low precision far away from the camera viewpoint. For example, FIG. 15 is a schematic diagram of voxels of a plurality of sizes according to an embodiment of this application.

1304: The terminal performs light tracing on the voxels whose sizes are adjusted, to obtain indirect illumination data of the plurality of voxels, and stores the indirect illumination data of the plurality of voxels in the voxel buffer library.

In some embodiments, the terminal performs light tracing on the voxels whose sizes are adjusted in a cone tracing manner, to obtain the indirect illumination data of the plurality of voxels. Correspondingly, the foregoing process in which the terminal performs light tracing on the voxels whose sizes are adjusted, to obtain the indirect illumination data of the plurality of voxels includes the following operations. The terminal divides a hemispherical space corresponding to a starting point of a ray into a plurality of cones, each cone corresponding to a cone angle and step distances at a plurality of levels, and the step distances at the plurality of levels being configured for indicating different distances at which the ray is emitted; and determines, for each cone and from the plurality of sizes of the voxels, target sizes respectively corresponding to the step distances at the plurality of levels, and obtains indirect illumination data of the voxels of the target sizes.

Cone tracing is a method for summarizing a light collection process. In this method, a cone replaces a single ray, and a hemispherical space is summarized into several cones to approximately collect the indirect illumination data. In addition, the voxel may be well combined. An area that needs to be sampled is calculated based on a cone propagation distance and an included angle of the cone, to quickly select a level of a step distance and a trace step. When a ray is emitted from the camera, it is ensured that the cone covers a specific area rather than a point of the pixel on a screen. Because the ray is replaced by a cone, and the ray has a volume, when calculation is performed on intersection between the ray and the object, not only whether the cone intersects with the object, but also a specific part of the cone intersects with the object can be obtained. Because the ray has the volume, one ray may intersect with a plurality objects. In this case, illumination calculation results of the plurality objects all affect a color of a final pixel, thereby achieving an anti-aliasing effect. In this embodiment, the step distances at different levels are set, and a size corresponding to the step distance is selected, to obtain indirect illumination data of a voxel of a corresponding size, thereby improving efficiency and achieving the anti-aliasing effect when precision is ensured.

For example, FIG. 16 is a schematic diagram of a cone and sizes of voxels according to an embodiment of this application. $C_0$ represents a starting point of a ray, $C_d$ represents a direction of the ray, and $\theta$ represents an angle of cone tracing, t represents a current overall step distance, and d represents a cone diameter corresponding to a single step. It can be learnt from the figure that, as a step quantity increases, t continuously increases, d also continuously increases, and overall iteration is faster. Correspondingly, a level of a step distance on which sampling is performed may be selected based on a value of d.

For example, referring to Formula (1), the terminal determines a target size through Formula (1).

$$d = 2t \times \tan(\theta \div 2) \qquad (1)$$

Correspondingly, as the step quantity increases, the level of the step distance also increases, and a step distance at a next level is greater than a step distance at a current level. For a step distance at each level, a cone diameter corresponding to the level is determined, and a target size matching the cone diameter in the plurality sizes of the voxel is further determined, that is, a target size corresponding to the step distance at the level is obtained.

In this embodiment of this application, a process of obtaining the voxel buffer library is implemented through the foregoing operation 1301 to operation 1304, and voxelization illumination buffering (Scene Voxelize) is implemented. This facilitates subsequent obtaining of the indirect illumination data of the voxel from the voxel buffer library, improves efficiency of obtaining the indirect illumination data, and further improves efficiency of illumination rendering.

Operation 1301 to operation 1304 are merely an implementation of obtaining the voxel buffer library, and the terminal may further obtain the voxel buffer library in another implementation. Details are not described herein again.

In this embodiment of this application, processes of obtaining the pixel buffer library, the surfel buffer library, and the voxel buffer library are all completed by a terminal that performs illumination rendering. In this way, global illumination rendering on a scene can be implemented through one terminal.

The illumination rendering method provided in the embodiments of this application may be named a SmartGI (scalable dynamic global illumination based on a hybrid architecture) technology. A full dynamic global illumination technology can be implemented on a mobile end through this technology. This technology is a global illumination (GI) framework based on the hybrid architecture. The GI is abstractly split into two parts: an illumination buffering (Surface Cache) part and an illumination collecting (Final Gather) part, and technologies such as screen space global illumination (SSGI), voxel global illumination (VoxelGI), and surfel global illumination (SurfelGI) are seamlessly integrated to perform illumination buffering. The SSGI is a global illumination technology for a screen space. Before indirect illumination data of each piece of illumination is calculated, direct illumination data of a pixel is calculated first, and then indirect illumination data of a colored point is collected through a light tracing technology for the screen space, thereby achieving a global illumination effect. In this technology, light reflection information of an object outside a screen cannot be obtained, causing poor accuracy of the indirect illumination data. The VoxelGI is a technology in which voxelization is performed on a scene and then illumination buffering is performed by using voxelized information. However, precision of voxelization is difficult to control. If the precision is inadequate, it is difficult to present a fine illumination effect, and if the precision is excessively high, there are storage pressure and performance pressure. The SurfelGI is a technology in which the scene is discretized into surfels, and illumination buffering is performed by using these discrete surfels. In the technology, the surfels are generated mainly based on a screen space seen in a camera. In the technology, effective surfel information cannot be generated at a place not seen in the camera, causing an incorrect illumination effect. In the method provided in the embodiments of this application, a plurality of implementations are seamlessly integrated, to resolve the foregoing technical problem. In addition, the method provided in the embodiments of this application supports a plurality of software and hardware light tracing solutions, such as an HZB-based light tracing technology, a multi-level texture-based cone tracing technology, an SDF-based light tracing technology, and a graphics processing unit (GPU)-based ray query technology, to implement the scalable dynamic global illumination.

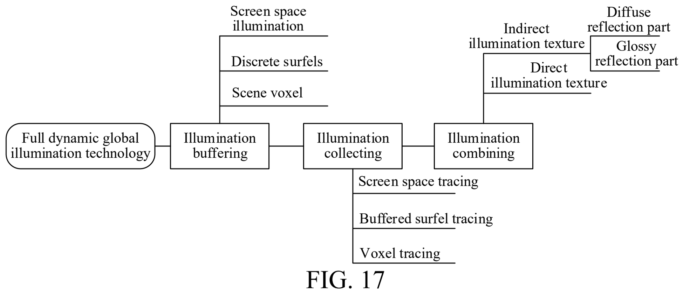

For example, FIG. 17 is a schematic diagram of a framework of global illumination according to an embodiment of this application. A full dynamic global illumination technology includes an illumination buffering part, an illumination collecting part, and an illumination combining part. In the illumination buffering part, a scene structure is described in a simple and low-cost form, and the illumination buffering part is used to buffer illumination data, including illumination data corresponding to screen space illumination, a discrete surfel, and a scene voxel. In the illumination collecting part, an illumination collection process is abstractly processed, and a plurality of software and hardware light tracing solutions may be supported for screen space tracing, buffered surfel tracing, voxel tracing, and the like, to resolve problems of performance and compatibility. In the illumination combining part, global rendering on a scene is implemented through an indirect illumination texture and a direct illumination texture. The indirect illumination texture includes indirect illumination data of a diffuse reflection part and a glossy reflection part.

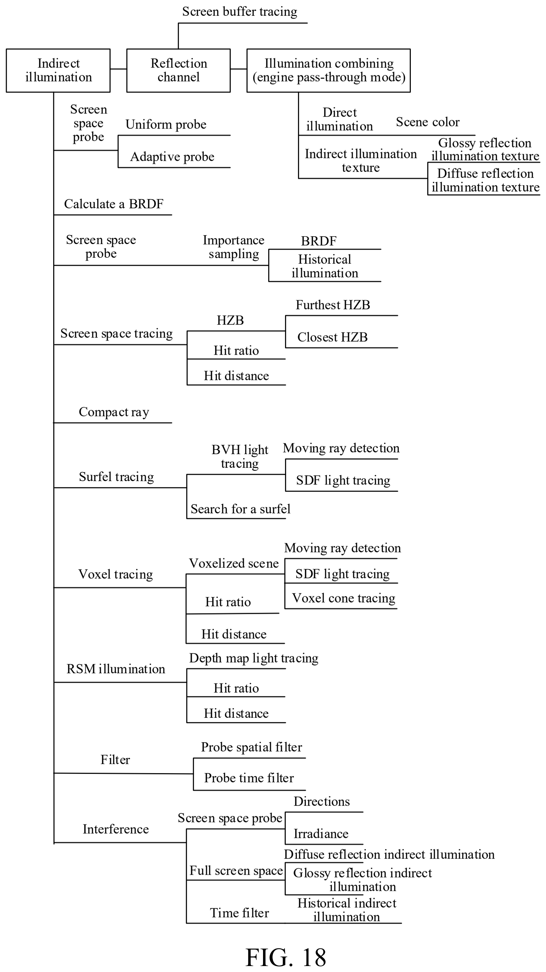

For another example, FIG. 18 is another schematic diagram of a framework of global illumination according to an embodiment of this application. When indirect illumination rendering is performed on a scene, a process mainly includes the following parts. First, a screen space probe is generated, which may be a uniform probe or an adaptive probe. Then, a BRDF is calculated, to generate a ray for the screen space probe and obtain light data. The process is implemented in an importance sampling method. The importance sampling method includes methods such as the BRDF and historical illumination. Then, light tracing may be performed in the screen space through a plurality of policies. In this process, a hit distance and a hit ratio may be further obtained. Then, a surfel and a voxel are detected, to obtain indirect illumination data of the surfel and the voxel. Screen space tracing includes a furthest HZB and a closest HZB in an HZB technology. In this process, the hit distance and the hit ratio may be further obtained. After screen space tracing is performed, surfel tracing and voxel tracing are performed based on a compact ray. Surfel tracing includes a BVH light tracing method. Further, a moving ray detection method and an SDF light tracing method are used, to search for a surfel. Voxel tracing includes voxelizing the scene. Further, the moving ray detection method, the SDF light tracing method, and a voxel cone tracing method are used, so that the hit distance and the hit ratio may be further obtained in this process. Then, reflective shadow maps (RSM) illumination (real-time global illumination) is obtained, and this process is implemented through a light tracing depth map, a ray hit distance, and a ray hit ratio. Then, filtering is performed. This process includes time filtering and spatial filtering on an illumination probe. Finally, interference is removed, that is, denoising is performed. A denoising process includes denoising on irradiance in all directions of the screen space, denoising on indirect illumination data of diffuse reflection and indirect illumination data of glossy reflection in the entire screen space, denoising on historical indirect illumination data corresponding to a time filter, and the like. Further, screen buffer tracing is performed through a reflection channel. In addition, at an illumination combining stage, illumination rendering is performed based on direct illumination data and indirect illumination data through an engine pass-through mode, and scene colors are rendered based on the direct illumination data. The indirect illumination data needs to include a glossy reflection illumination texture and a diffuse reflection illumination texture.

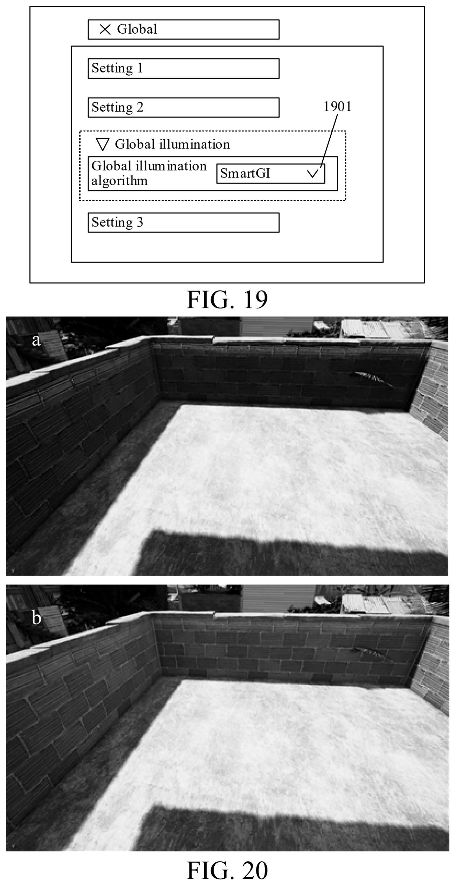

For example, FIG. 19 is a schematic diagram of an illumination setting interface according to an embodiment of this application. The illumination setting interface is an unreal engine 5 (ue5) interface. A selection control 1901 of an illumination algorithm is displayed on the illumination setting interface. The selection control 1901 is configured to set a global illumination algorithm, for example, select a SmartGI algorithm. For example, FIG. 20 is a schematic diagram of an illumination effect in a scene according to an embodiment of this application. A scene shown in a in FIG. 20 has only an effect of daylight, and a scene shown in b in FIG. 20 has an effect of global illumination. It may be learned by comparison that the illumination effect of the scene shown in b in FIG. 20 is better.

In comparison to problems in a static global illumination technology that a map is baked for a long time, storage pressure for large scene data is large, and the scene and illumination cannot be changed, full dynamic global illumination is implemented in the method provided in the embodiments of this application, and illumination rendering on the scene can achieve effects of zero-cost baking, zero pre-calculated data, cross-platform, high-performance, and real-time dynamic illumination and a dynamic scene.

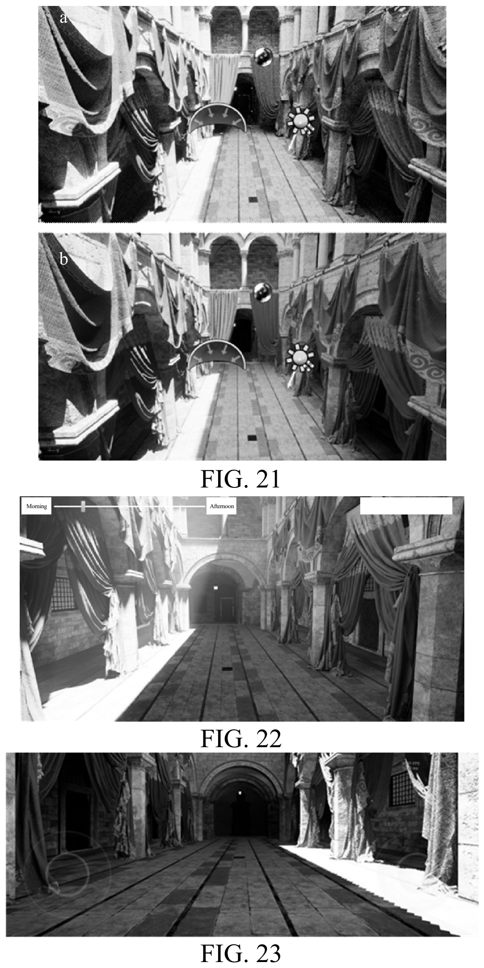

For example, FIG. 21 is a schematic diagram of comparison between illumination effects according to an embodiment of this application. a in FIG. 21 is a schematic diagram of illumination in a scene obtained through a static global illumination technology, and b in FIG. 21 is a schematic diagram of illumination in the scene obtained in a method provided in the embodiments of this application. It may be learned by comparison that in the method provided in the embodiments of this application, even if an illumination map is not baked offline through the static global illumination technology, an effect the same as an effect of the static global illumination technology can be achieved. That is, the illumination effect obtained through rendering in the method provided in the embodiments of this application is good.

In the method provided in the embodiments of this application, that the illumination effect varies with time is supported. For example, FIG. 22 is a schematic diagram of adjusting an illumination effect according to an embodiment of this application. A slider bar is displayed on a terminal, and the terminal adjusts, in response to an adjustment operation on the slider bar, an illumination effect in a scene. For example, an illumination effect during a day is different from an illumination effect during a night, and an illumination effect during a morning is different from an illumination effect during an afternoon. That is, in the method provided in the embodiments of this application, the illumination effect is dynamically and flexibly adjusted based on time.

In the method provided in the embodiments of this application, a high-precision frame rate can be further supported, for example, 60 fps, 90 fps, 120 fps, or the like may be supported. For example, FIG. 23 is a schematic diagram of a scene obtained after illumination rendering is performed according to an embodiment of this application. A frame rate of the scene picture reaches 60 fps.

The embodiments of this application provide an illumination rendering method. In the method, an illumination probe is configured to determine a ray that hits a pixel and a ray that does not hit a pixel, and obtain indirect illumination data of the hit pixel. For the ray that does not hit the pixel, an element hit by the ray in a current screen space and outside the current screen space is obtained, and indirect illumination data of the hit elements is obtained. In this way, in this method, illumination rendering is performed through the indirect illumination data of the pixel and the indirect illumination data of the element, so that the indirect illumination data of the element is effectively added to the indirect illumination data of the pixel. In addition, the indirect illumination data of the element further includes indirect illumination data outside the current screen space, thereby further improving comprehensiveness and accuracy of the indirect illumination data. Further, illumination rendering is performed on the scene based on such indirect illumination data, so that accuracy of illumination rendering can be improved.

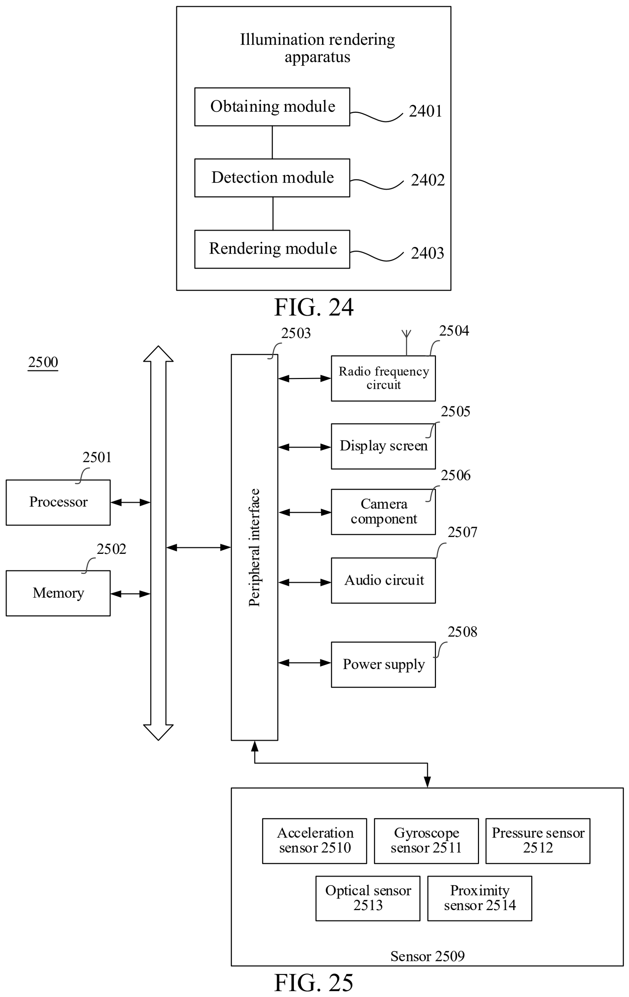

FIG. 24 is a block diagram of an illumination rendering apparatus according to an embodiment of this application. Referring to FIG. 24, the apparatus includes:

an obtaining module 2401, configured to obtain light data of a plurality of illumination probes in a scene, the light data including starting points and directions of a plurality of rays on the illumination probes;

a detection module 2402, configured to determine, based on the light data, a first ray, a second ray, and first indirect illumination data in the plurality of rays, the first ray being a ray that hits a pixel in a current screen space in the scene, the second ray being a ray that does not hit a pixel in the current screen space, and the first indirect illumination data being indirect illumination data of the hit pixel; in embodiments of the present application, the detection module 2402 can also be configured to determine, based on the light data and from the plurality of rays, a first ray reaching a pixel in a current screen space in the scene, a second ray missing all pixels in the current screen space in the scene, and first indirect illumination data which is indirect illumination data of the pixel reached by the first ray;

the obtaining module 2401, further configured to obtain an element hit by the second ray in the current screen space and outside the current screen space, and obtain second indirect illumination data from an illumination buffer library of the element, the second indirect illumination data being indirect illumination data of the element; in embodiments of the present application, the obtaining module 2401 can also be configured to obtain a screen element reached by the second ray in the current screen space and a screen element reached by the second ray outside the current screen space, and obtaining second indirect illumination data from an illumination buffer library of the screen element, the second indirect illumination data being indirect illumination data of the screen element; and

a rendering module 2403, configured to perform illumination rendering (namely, lighting rendering) on the scene based on the first indirect illumination data and the second indirect illumination data.

In some embodiments, the obtaining module 2401 is configured to perform at least one of the following:

determining, in the current screen space and outside the current screen space, a surfel hit by the second ray, and obtaining indirect illumination data of the hit surfel from a surfel buffer library; and

determining, in the current screen space and outside the current screen space, a voxel hit by the second ray, and obtaining indirect illumination data of the hit voxel from a voxel buffer library.

In some embodiments, there are a plurality of second rays, and the obtaining module 2401 is configured to:

determine, in the current screen space and outside the current screen space, the surfel hit by the second ray, and obtain the indirect illumination data of the hit surfel from the surfel buffer library; determine a third ray in the plurality of second rays, the third ray being a ray that does not hit a surfel; determine, in the current screen space and outside the current screen space, a voxel hit by the third ray, and obtain indirect illumination data of the hit voxel from the voxel buffer library; or

determine, in the current screen space and outside the current screen space, the voxel hit by the second ray, and obtain the indirect illumination data of the hit voxel from the voxel buffer library; determine a fourth ray in the plurality of second rays, the fourth ray being a ray that does not hit a voxel; and determine, in the current screen space and outside the current screen space, a surfel hit by the fourth ray, and obtain indirect illumination data of the hit surfel from the surfel buffer library.

In some embodiments, the apparatus further includes:

a discretizing module, configured to discretize the scene into a plurality of surfels, perform light tracing on the plurality of surfels, to obtain indirect illumination data of the plurality of surfels, and store the indirect illumination data of the plurality of surfels in a first buffer of the surfel buffer library;

a division module, configured to convert the scene into a three-dimensional mesh, the three-dimensional mesh including a plurality of meshes;

a surfel storage module, configured to separately store, in each mesh, a surfel index of a surfel corresponding to the mesh, the surfel index being configured for obtaining indirect illumination data of the surfel from the first buffer; and

the surfel storage module, further configured to store the three-dimensional mesh in a second buffer of the surfel buffer library.

In some embodiments, the apparatus further includes a screening module, configured to:
screen, from the plurality of meshes in the second buffer, a mesh that does not store the surfel index, and delete the mesh that does not store the surfel index.
In some embodiments, the discretizing module is configured to:

divide the scene into a plurality of blocks, pixels in the plurality of blocks being covered by the surfels; and

determine, for each block, a target pixel having a minimum surfel coverage in the block, and generate, when the surfel coverage of the target pixel does not satisfy a coverage threshold, a surfel at the target pixel, until surfel coverages of a plurality of pixels in the block separately satisfy the coverage threshold.

In some embodiments, the apparatus further includes:

a voxelization module, configured to perform voxelization on the scene, to obtain a plurality of voxels of each object in the scene;

an embedding module, configured to embed normal data, depth data, and albedo data of the object into the plurality of voxels of the object, to obtain a three-dimensional texture map of the object;

an adjustment module, configured to adjust, for a plurality of voxels included in the three-dimensional texture map and based on a distance between the voxel and a camera viewpoint, sizes of the plurality of voxels, a size of each voxel being positively correlated to a distance corresponding to the voxel; and

a voxel storage module, configured to perform light tracing on the voxels whose sizes are adjusted, to obtain indirect illumination data of the plurality of voxels, and store the indirect illumination data of the plurality of voxels in the voxel buffer library.

In some embodiments, the voxel storage module is configured to:

divide a hemispherical space corresponding to a starting point of a ray into a plurality of cones, each cone corresponding to a cone angle and step distances at a plurality of levels, and the step distances at the plurality of levels being configured for indicating different distances at which the ray is emitted; and

determine, for each cone and from the plurality of sizes of the voxels, target sizes respectively corresponding to the step distances at the plurality of levels, and obtain indirect illumination data of the voxels of the target sizes.

In some embodiments, the first indirect illumination data is obtained from a pixel buffer library, and the obtaining module 2401 is further configured to obtain scene data of a previous frame of picture of a current frame of picture in the scene, and determine, based on the scene data and light bouncing data corresponding to the current frame of picture, a picture map of the current frame of picture, the picture map including depth data of a plurality of pixels.

The apparatus further includes a pixel storage module, further configured to perform light tracing based on the picture map, to obtain indirect illumination data of the plurality of pixels in the current frame of picture, and store the indirect illumination data in the pixel buffer library.

In some embodiments, the rendering module 2403 is configured to:

perform illumination interpolation on a pixel in the current screen space based on the first indirect illumination data and the second indirect illumination data, and perform illumination rendering on the scene based on the first indirect illumination data and indirect illumination data that is obtained through interpolation.

In some embodiments, the rendering module 2403 is configured to:

perform denoising processing on third indirect illumination data, and perform illumination rendering on the scene based on the third indirect illumination data on which denoising processing is performed, the third indirect illumination data including the first indirect illumination data and the indirect illumination data that is obtained through interpolation.

In some embodiments, the rendering module 2403 is configured to:

obtain direct illumination data of the scene;

determine global illumination data based on the first indirect illumination data, the second indirect illumination data, and the direct illumination data; and

perform illumination rendering on the scene based on the global illumination data.

The embodiments of this application provide an illumination rendering apparatus. In the apparatus, the illumination probe is configured to determine a ray that hits a pixel and a ray does not hit a pixel, and obtain indirect illumination data of the hit pixel. For the ray that does not hit the pixel, an element hit by the ray in the current screen space and outside the current screen space is obtained, and indirect illumination data of the hit elements is obtained. In this way, in this method, illumination rendering is performed through the indirect illumination data of the pixel and the indirect illumination data of the element, so that the indirect illumination data of the element is effectively added to the indirect illumination data of the pixel. In addition, the indirect illumination data of the element further includes indirect illumination data outside the current screen space, thereby further improving comprehensiveness and accuracy of the indirect illumination data. Further, illumination rendering is performed on the scene based on such indirect illumination data, so that accuracy of illumination rendering can be improved.

FIG. 25 is a structural block diagram of a terminal 2500 according to an exemplary embodiment of this application. The terminal 2500 includes a processor 2501 and a memory 2502.

The processor 2501 may include one or more processing cores, for example, a 4-core processor or an 8-core processor. In some embodiments, the processor 2501 may be integrated with a GPU. The GPU is configured to render and draw content that needs to be displayed on a display screen. In some embodiments, the processor 2501 may further include an artificial intelligence (AI) processor. The AI processor is configured to process computing operations related to machine learning.

The memory 2502 may include one or more computer-readable storage media. The computer-readable storage medium may be non-transient. The memory 2502 may further include a high-speed random access memory and a non-volatile memory, for example, one or more disk storage devices or flash storage devices. In some embodiments, the non-transient computer-readable storage medium in the memory 2502 is configured to store at least one piece of program code, and the at least one piece of program code is configured to be executed by the processor 2501 to implement the illumination rendering method provided in the method embodiments of this application.

In some embodiments, the terminal 2500 may further include a peripheral interface 2503 and at least one peripheral. The processor 2501, the memory 2502, and the peripheral interface 2503 may be connected through a bus or a signal cable. Each peripheral may be connected to the peripheral interface 2503 through a bus, a signal cable, or a circuit board. Specifically, the peripheral includes at least one of a radio frequency circuit 2504, a display screen 2505, a camera component 2506, an audio circuit 2507, and a power supply 2508.

In some embodiments, the terminal 2500 further includes one or more sensors 2509. The one or more sensors 2509 include but are not limited to: an acceleration sensor 2510, a gyroscope sensor 2511, a pressure sensor 2512, an optical sensor 2513, and a proximity sensor 2514.

A person skilled in the art may understand that the structure shown in FIG. 25 constitutes no limitation on the terminal 2500, and the terminal may include more or fewer components than those shown in the figure, or some components may be combined, or a different component deployment may be used.

An embodiment of this application further provides a computer-readable storage medium, having at least one program stored therein, the at least one program being loaded and executed by a processor to implement the illumination rendering method according to any one of the foregoing implementations.

An embodiment of this application further provides a computer program product, including computer program code, the computer program code being stored in a computer-readable storage medium, a processor of a terminal reading the computer program code from the computer-readable storage medium, and the processor executing the computer program code, causing the terminal to perform the illumination rendering method according to any one of the foregoing implementations.

In some embodiments, the computer program product in this embodiment of this application may be deployed on one terminal for execution, or may be executed on a plurality of terminals located at one position, or may be executed on a plurality of terminals that are distributed at a plurality of positions and interconnected through a communication network. The plurality of terminals that are distributed at the plurality of positions and interconnected through the communication network may form a blockchain system.

The foregoing descriptions are merely exemplary embodiments of this application, but are not intended to limit this application. Any modification, equivalent replacement, or improvement made within the spirit and principle of this application shall fall within the protection scope of this application.

**Claims**

1. A lighting rendering method, applied to a terminal and comprising:

   obtaining light data of a plurality of lighting probes in a scene, the light data comprising starting points and directions of a plurality of rays on the lighting probes;
   determining, based on the light data and from the plurality of rays, a first ray reaching a pixel in a current screen space in the scene, a second ray missing all pixels in the current screen space in the scene, and first indirect illumination data which is indirect illumination data of the pixel reached by the first ray;
   obtaining a screen element reached by the second ray in the current screen space and a screen element reached by the second ray outside the current screen space, and obtaining second indirect illumination data from an illumination buffer library of the screen element, the second indirect illumination data being indirect illumination data of the screen element; and
   performing lighting rendering on the scene based on the first indirect illumination data and the second indirect illumination data.

2. The method according to claim 1, wherein the obtaining a screen element reached by the second ray in the current screen space and a screen element reached by the second ray outside the current screen space, and obtaining second indirect illumination data from an illumination buffer library of the screen element comprises at least one of the following:

determining, in the current screen space and outside the current screen space, a surfel reached by the second ray, and obtaining indirect illumination data of the surfel from a surfel buffer library; and
determining, in the current screen space and outside the current screen space, a voxel reached by the second ray, and obtaining indirect illumination data of the voxel from a voxel buffer library.

3. The method according to claim 1, wherein there are a plurality of second rays, and the obtaining a screen element reached by the second ray in the current screen space and a screen element reached by the second ray outside the current screen space, and obtaining second indirect illumination data from an illumination buffer library of the screen element comprises:

determining, in the current screen space and outside the current screen space, a surfel reached by the second ray, and obtaining indirect illumination data of the surfel from a surfel buffer library; determining a third ray in the plurality of second rays, the third ray being a ray that misses all surfels; determining, in the current screen space and outside the current screen space, a voxel reached by the third ray, and obtaining indirect illumination data of the voxel from a voxel buffer library; or
determining, in the current screen space and outside the current screen space, a voxel reached by the second ray, and obtaining indirect illumination data of the voxel from the voxel buffer library; determining a fourth ray in the plurality of second rays, the fourth ray being a ray that misses all voxels; and determining, in the current screen space and outside the current screen space, a surfel reached by the fourth ray, and obtaining indirect illumination data of the surfel from the surfel buffer library.

4. The method according to claim 2 or 3, wherein a process of obtaining the surfel buffer library comprises:

discretizing the scene into a plurality of surfels, performing light tracing on the plurality of surfels, to obtain indirect illumination data of the plurality of surfels, and storing the indirect illumination data of the plurality of surfels in a first buffer of the surfel buffer library;
converting the scene into a three-dimensional mesh, the three-dimensional mesh comprising a plurality of meshes;
separately storing, in each mesh, a surfel index of a surfel corresponding to the mesh, the surfel index being configured for obtaining indirect illumination data of the surfel from the first buffer; and
storing the three-dimensional mesh in a second buffer of the surfel buffer library.

5. The method according to claim 4, wherein the method further comprises:
screening, from the plurality of meshes in the second buffer, a mesh that does not store the surfel index, and deleting the mesh that does not store the surfel index.

6. The method according to claim 4, wherein the discretizing the scene into a plurality of surfels comprises:

dividing the scene into a plurality of blocks, pixels in the plurality of blocks being covered by the surfels; and
determining, for each block, a target pixel having a minimum surfel coverage in the block, and generating, when the surfel coverage of the target pixel does not satisfy a coverage threshold, a surfel at the target pixel, until surfel coverages of a plurality of pixels in the block separately satisfy the coverage threshold.

7. The method according to claim 2 or 3, wherein a process of obtaining the voxel buffer library comprises:

performing voxelization on the scene, to obtain a plurality of voxels of each object in the scene;
embedding normal data, depth data, and albedo data of the object into the plurality of voxels of the object, to obtain a three-dimensional texture map of the object;
adjusting, for a plurality of voxels comprised in the three-dimensional texture map and based on a distance between the voxel and a camera viewpoint, sizes of the plurality of voxels, a size of each voxel being positively correlated to a distance corresponding to the voxel; and
performing light tracing on the voxels whose sizes are adjusted, to obtain indirect illumination data of the plurality of voxels, and storing the indirect illumination data of the plurality of voxels in the voxel buffer library.

8. The method according to claim 7, wherein the performing light tracing on the voxels whose sizes are adjusted, to obtain indirect illumination data of the plurality of voxels comprises:

dividing a hemispherical space corresponding to a starting point of a ray into a plurality of cones, each cone corresponding to a cone angle and step distances at a plurality of levels, and the step distances at the plurality of levels being configured for indicating different distances at which the ray is emitted; and

determining, for each cone and from the plurality of sizes of the voxels, target sizes respectively corresponding to the step distances at the plurality of levels, and obtaining indirect illumination data of the voxels of the target sizes.

9. The method according to claim 1, wherein the first indirect illumination data is obtained from a pixel buffer library, and a process of obtaining the pixel buffer library comprises:

obtaining scene data of a previous frame of picture of a current frame of picture in the scene, and determining, based on the scene data and light bouncing data corresponding to the current frame of picture, a picture map of the current frame of picture, the picture map comprising depth data of a plurality of pixels; and

performing light tracing based on the picture map, to obtain indirect illumination data of the plurality of pixels in the current frame of picture, and storing the indirect illumination data of the plurality of pixels in the pixel buffer library.

10. The method according to claim 1, wherein the performing lighting rendering on the scene based on the first indirect illumination data and the second indirect illumination data comprises:

performing lighting interpolation on a pixel in the current screen space based on the first indirect illumination data and the second indirect illumination data, and performing lighting rendering on the scene based on the first indirect illumination data and indirect illumination data that is obtained through interpolation.

11. The method according to claim 10, wherein the performing lighting rendering on the scene based on the first indirect illumination data and indirect illumination data that is obtained through interpolation comprises:

performing denoising processing on third indirect illumination data, and performing lighting rendering on the scene based on the third indirect illumination data on which denoising processing is performed, the third indirect illumination data comprising the first indirect illumination data and the indirect illumination data that is obtained through interpolation.

12. The method according to claim 1, wherein the performing lighting rendering on the scene based on the first indirect illumination data and the second indirect illumination data comprises:

obtaining direct illumination data of the scene;

determining global illumination data based on the first indirect illumination data, the second indirect illumination data, and the direct illumination data; and

performing lighting rendering on the scene based on the global illumination data.

13. An illumination rendering apparatus, comprising:

an obtaining module, configured to obtain light data of a plurality of lighting probes in a scene, the light data comprising starting points and directions of a plurality of rays on the lighting probes;

a detection module, configured to determine, based on the light data and from the plurality of rays, a first ray reaching a pixel in a current screen space in the scene, a second ray missing all pixels in the current screen space in the scene, and first indirect illumination data which is indirect illumination data of the pixel reached by the first ray;

the obtaining module, further configured to obtain a screen element reached by the second ray in the current screen space and a screen element reached by the second ray outside the current screen space, and obtaining second indirect illumination data from an illumination buffer library of the screen element, the second indirect illumination data being indirect illumination data of the screen element; and

a rendering module, configured to perform lighting rendering on the scene based on the first indirect illumination data and the second indirect illumination data.

14. A terminal, comprising a processor and a memory, the memory being configured to store at least one program, and the at least one program being loaded by the processor to perform the illumination rendering method according to any one of claims 1 to 12.

15. A computer-readable storage medium, configured to store at least one program, and the at least one program being configured to perform the illumination rendering method according to any one of claims 1 to 12.

16. A computer program product, comprising computer program code, the computer program code being stored in a computer-readable storage medium, and a processor of a terminal reading the computer program code from the computer-readable storage medium, and the processor executing the computer program code, causing the terminal to perform the illumination rendering method according to any one of claims 1 to 12.

FIG. 1

| |
|---|
| A terminal obtains light data of a plurality of illumination probes in a scene, the light data including starting points and directions of a plurality of rays on the illumination probes |

201

| |
|---|
| The terminal determines a first ray, a second ray, and first indirect illumination data of the plurality of rays based on the light data, the first ray being a ray that hits a pixel in a current screen space in the scene, the second ray being a ray that does not hit a pixel in the current screen space, and the first indirect illumination data being indirect illumination data of the hit pixel |

202

| |
|---|
| The terminal obtains an element hit by the second ray in the current screen space and outside the current screen space, and obtains second indirect illumination data from an illumination buffer library of the element, the second indirect illumination data being indirect illumination data of the element |

203

| |
|---|
| The terminal performs illumination rendering on the scene based on the first indirect illumination data and the second indirect illumination data |

204

FIG. 2

A terminal generates a plurality of illumination probes for a scene — 301

The terminal obtains light data of the plurality of illumination probes in the scene, the light data including starting points and directions of a plurality of rays on the illumination probes — 302

The terminal determines a first ray, a second ray, and first indirect illumination data of the plurality of rays based on the light data, the first ray being a ray that hits a pixel in a current screen space in the scene, the second ray being a ray that does not hit a pixel in the current screen space, and the first indirect illumination data being indirect illumination data of the hit pixel — 303

The terminal determines, based on the second ray and in the current screen space and outside the current screen space, a surfel hit by the second ray, and obtains indirect illumination data of the hit surfel from a surfel buffer library — 304

The terminal determines a third ray in the plurality of second rays, the third ray being a ray that does not hit a surfel — 305

The terminal determines, based on the third ray and in the current screen space and outside the current screen space, a voxel hit by the third ray, and obtains indirect illumination data of the hit voxel from a voxel buffer library — 306

The terminal performs illumination interpolation on a pixel in the current screen space based on the first indirect illumination data and second indirect illumination data, to obtain interpolated indirect illumination data, the second indirect illumination data including the indirect illumination data of the surfel and the indirect illumination data of the voxel — 307

The terminal performs denoising processing on third indirect illumination data, and performs illumination rendering on the scene based on the third indirect illumination data on which denoising processing is performed, the third indirect illumination data including the first indirect illumination data and indirect illumination data that is obtained through interpolation — 308

FIG. 3

A terminal obtains scene data of a previous frame of picture of a current frame of picture in a scene, and determines a picture map of the current frame of picture based on the scene data and light bouncing data corresponding to the current frame of picture, the picture map including depth data of a plurality of pixels — 401

The terminal performs light tracing based on the picture map, to obtain indirect illumination data of the plurality of pixels in the current frame of picture, and stores the indirect illumination data of the plurality of pixels in a pixel buffer library — 402

FIG. 4

FIG. 5

FIG. 6

FIG. 7

A terminal discretizes a scene into a plurality of surfels, performs light tracing on the plurality of surfels, to obtain indirect illumination data of the plurality of surfels, and stores the indirect illumination data of the plurality of surfels in a first buffer of a surfel buffer library · 801

The terminal converts the scene into a three-dimensional mesh, the three-dimensional mesh including a plurality of meshes · 802

The terminal separately stores, in each mesh, a surfel index of a surfel corresponding to the mesh, the surfel index being configured for obtaining indirect illumination data of the surfel from the first buffer; and stores the three-dimensional mesh in a second buffer of the surfel buffer library · 803

FIG. 8

FIG. 9

FIG. 10

FIG. 11

FIG. 12

1301

A terminal performs voxelization on a scene, to obtain a plurality of voxels of each object in the scene

1302

The terminal embeds normal data, depth data, and albedo data of the object into the plurality of voxels of the object, to obtain a three-dimensional texture map of the object

1303

The terminal adjusts sizes of the plurality of voxels for the plurality of voxels included in the three-dimensional texture map and based on a distance between the voxel and a camera viewpoint, a size of each voxel being positively correlated to a distance corresponding to the voxel

1304

The terminal performs light tracing on the voxels whose sizes are adjusted, to obtain indirect illumination data of the plurality of voxels, and stores the indirect illumination data of the plurality of voxels in a voxel buffer library

FIG. 13

Albedo          Normal          Depth

Voxelization

## FIG. 14

Level 0
64 elements

Level 1
64 elements

Level 2
64 elements

Level 3
Eight elements

Level 4
One element

## FIG. 15

## FIG. 16

Screen space
illumination

Discrete surfels

Scene voxel

Indirect
illumination texture

Diffuse
reflection part

Glossy
reflection part

Direct
illumination texture

Full dynamic global
illumination technology → Illumination
buffering — Illumination
collecting — Illumination
combining

Screen space tracing

Buffered surfel tracing

Voxel tracing

FIG. 17

EP 4 670 808 A1

Screen buffer tracing

Indirect illumination — Reflection channel — Illumination combining (engine pass-through mode)

Screen space probe
Uniform probe
Adaptive probe

Direct illumination — Scene color

Indirect illumination texture — Glossy reflection illumination texture

Diffuse reflection illumination texture

Calculate a BRDF

Screen space probe — Importance sampling — BRDF

Historical illumination

Screen space tracing — HZB — Furthest HZB

Closest HZB

Hit ratio

Hit distance

Compact ray

Surfel tracing — BVH light tracing — Moving ray detection

SDF light tracing

Search for a surfel

Voxel tracing — Voxelized scene — Moving ray detection

SDF light tracing

Voxel cone tracing

Hit ratio

Hit distance

RSM illumination — Depth map light tracing

Hit ratio

Hit distance

Filter — Probe spatial filter

Probe time filter

Interference — Screen space probe — Directions

Irradiance

Full screen space — Diffuse reflection indirect illumination

Glossy reflection indirect illumination

Time filter — Historical indirect illumination

# FIG. 18

FIG. 19

FIG. 20

FIG. 21

FIG. 22

FIG. 23

Illumination rendering
apparatus

| Obtaining module | 2401 |

| Detection module | 2402 |

| Rendering module | 2403 |

FIG. 24

2500

Processor 2501

Memory 2502

Peripheral interface 2503

Radio frequency circuit 2504

Display screen 2505

Camera component 2506

Audio circuit 2507

Power supply 2508

Acceleration sensor 2510

Gyroscope sensor 2511

Pressure sensor 2512

Optical sensor 2513

Proximity sensor 2514

Sensor 2509

FIG. 25

## INTERNATIONAL SEARCH REPORT

| International application No. |
| --- |
| **PCT/CN2024/091543** |

### A. CLASSIFICATION OF SUBJECT MATTER

A63F13/52(2014.01)i

According to International Patent Classification (IPC) or to both national classification and IPC

### B. FIELDS SEARCHED

Minimum documentation searched (classification system followed by classification symbols)

IPC: A63F13

Documentation searched other than minimum documentation to the extent that such documents are included in the fields searched

Electronic data base consulted during the international search (name of data base and, where practicable, search terms used)

VEN, CNTXT, CNABS, CNKI: render, scene, illumination, light, probe, ray, direction, pixel, indirect, space, data, 渲染, 场景, 光照, 探针, 射线, 方向, 像素, 间接, 空间, 数据

### C. DOCUMENTS CONSIDERED TO BE RELEVANT

| Category* | Citation of document, with indication, where appropriate, of the relevant passages | Relevant to claim No. |
| --- | --- | --- |
| PX | CN 116672706 A (TENCENT TECHNOLOGY (SHENZHEN) CO., LTD.) 01 September 2023 (2023-09-01) description, paragraphs [0087]-[0126], and figures 1-25 | 1-16 |
| A | CN 115393499 A (GUANGZHOU JIDIAN 3DXT INFORMATION TECHNOLOGY CO., LTD.) 25 November 2022 (2022-11-25) description, paragraphs [0048]-[0132], and figure 1 | 1-16 |
| A | CN 112927341 A (TENCENT TECHNOLOGY (SHENZHEN) CO., LTD.) 08 June 2021 (2021-06-08) entire document | 1-16 |
| A | CN 115810077 A (NETEASE (HANGZHOU) NETWORK CO., LTD.) 17 March 2023 (2023-03-17) entire document | 1-16 |
| A | CN 115830208 A (TENCENT TECHNOLOGY (SHENZHEN) CO., LTD.) 21 March 2023 (2023-03-21) entire document | 1-16 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 August 2024** | **09 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/091543** |

**C. DOCUMENTS CONSIDERED TO BE RELEVANT**

| Category* | Citation of document, with indication, where appropriate, of the relevant passages | Relevant to claim No. |
|---|---|---|
| A | US 2015262407 A1 (IMAGINATION TECHNOLOGIES LTD.) 17 September 2015 (2015-09-17) entire document | 1-16 |
| A | US 2016260247 A1 (IMAGINATION TECHNOLOGIES LTD.) 08 September 2016 (2016-09-08) entire document | 1-16 |

Form PCT/ISA/210 (second sheet) (July 2022)

## INTERNATIONAL SEARCH REPORT
### Information on patent family members

International application No.

**PCT/CN2024/091543**

| Patent document cited in search report | | | Publication date (day/month/year) | Patent family member(s) | | | Publication date (day/month/year) |
|---|---|---|---|---|---|---|---|
| CN | 116672706 | A | 01 September 2023 | None | | | |
| CN | 115393499 | A | 25 November 2022 | None | | | |
| CN | 112927341 | A | 08 June 2021 | None | | | |
| CN | 115810077 | A | 17 March 2023 | None | | | |
| CN | 115830208 | A | 21 March 2023 | None | | | |
| US | 2015262407 | A1 | 17 September 2015 | US | 2020265639 | A1 | 20 August 2020 |
| | | | | US | 10991153 | B2 | 27 April 2021 |
| | | | | US | 2018357818 | A1 | 13 December 2018 |
| | | | | US | 10679405 | B2 | 09 June 2020 |
| | | | | US | 10083541 | B2 | 25 September 2018 |
| | | | | US | 2021225068 | A1 | 22 July 2021 |
| US | 2016260247 | A1 | 08 September 2016 | US | 2021383599 | A1 | 09 December 2021 |
| | | | | US | 11734879 | B2 | 22 August 2023 |
| | | | | GB | 201907416 | D0 | 10 July 2019 |
| | | | | GB | 2571656 | A | 04 September 2019 |
| | | | | GB | 2571656 | B | 27 November 2019 |
| | | | | US | 10008032 | B2 | 26 June 2018 |
| | | | | GB | 201907419 | D0 | 10 July 2019 |
| | | | | GB | 2571657 | A | 04 September 2019 |
| | | | | GB | 2571657 | B | 27 November 2019 |
| | | | | US | 2020258293 | A1 | 13 August 2020 |
| | | | | US | 11127198 | B2 | 21 September 2021 |
| | | | | DE | 102016103854 | A1 | 08 September 2016 |
| | | | | US | 2023394750 | A1 | 07 December 2023 |
| | | | | GB | 201603711 | D0 | 20 April 2016 |
| | | | | GB | 2537728 | A | 26 October 2016 |
| | | | | GB | 2537728 | B | 27 November 2019 |
| | | | | US | 2018268603 | A1 | 20 September 2018 |
| | | | | US | 10410408 | B2 | 10 September 2019 |
| | | | | US | 2018268602 | A1 | 20 September 2018 |
| | | | | US | 10672183 | B2 | 02 June 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310972605